(19) Europäisches Patentamt
European Patent Office
Office européen des brevets

(11) **EP 3 466 720 B1**

(12) **EUROPEAN PATENT SPECIFICATION**

(45) Date of publication and mention
of the grant of the patent:
**03.06.2020  Bulletin 2020/23**

(21) Application number: **17802367.7**

(22) Date of filing: **22.02.2017**

(51) Int Cl.:
*B60C 7/00* *(2006.01)*          *B60C 11/00* *(2006.01)*
*B60C 1/00* *(2006.01)*          *B60C 5/01* *(2006.01)*
*B60C 9/20* *(2006.01)*          *B60C 9/22* *(2006.01)*

(86) International application number:
**PCT/JP2017/006590**

(87) International publication number:
**WO 2017/203765 (30.11.2017 Gazette 2017/48)**

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **26.05.2016  JP 2016105703**

(43) Date of publication of application:
**10.04.2019  Bulletin 2019/15**

(73) Proprietor: **Bridgestone Corporation
Tokyo 104-8340 (JP)**

(72) Inventor: **KAWASHIMA, Keisuke
Tokyo 104-8340 (JP)**

(74) Representative: **Lang, Johannes
Bardehle Pagenberg Partnerschaft mbB
Patentanwälte, Rechtsanwälte
Prinzregentenplatz 7
81675 München (DE)**

(56) References cited:
**WO-A1-2010/095688          WO-A1-2015/182152
JP-A- 2002 179 842          JP-A- 2007 045 273
JP-A- 2008 143 485          JP-A- 2009 298 247
JP-A- 2012 006 452          JP-A- 2012 092 179
JP-A- 2014 189 084          JP-A- 2016 074 408**

**Description**

TECHNICAL FIELD

The present disclosure relates to a tire.

BACKGROUND

In recent years, there has been development of tires in which resin materials, such as thermoplastic resins and thermoplastic elastomers, are used due to the light weight and ease of recycling of such tires.

In one example, PTL 1, shown below, discloses a tire that includes a reinforcement cord layer (reinforcement layer) at an outer circumference of a tire frame having an annular shape, wherein the tire frame is formed from a resin material, and also discloses a tire in which the reinforcement layer is also formed using a resin material. JP 2014 189084 A discloses a tire comprising a tire frame having an annular shape; a reinforcement layer located outward of the tire frame in a tire radial direction; and tread rubber located outward of the reinforcement layer in the tire radial direction, wherein the reinforcement layer includes a reinforcement member that is coated with a resin composition containing from 50 mass% to 100 mass% of a resin material.

CITATION LIST

Patent Literature

PTL 1: JP 2012-046030 A

SUMMARY

(Technical Problem)

However, although a tire in which a resin material is used in a tire frame or reinforcement layer has an excellent low loss property and so forth, the resin material softens when the tire reaches a high temperature due to heat buildup during running or the like, and, as a result, there is still room for improvement in terms of durability during high-speed running (hereinafter, referred to as "high-speed durability") in which the tire reaches a high temperature.

One technique that has been considered for enhancing high-speed durability of a tire is the adoption of a rubber composition having an excellent low loss property in tread rubber. However, it has not been possible to sufficiently improve tire high-speed durability since simply improving the low loss property of the tread rubber reduces the storage modulus (E') of the tread rubber and increases strain of the tread and tire members around the tread.

The present disclosure aims to solve the problems experienced by the conventional techniques described above and provide a tire that has excellent high-speed durability even though a resin material is used therein.

(Solution to Problem)

The following describes the main features that are disclosed herein for solving the aforementioned problems.

A tire according to claim 1 comprises: a tire frame having an annular shape; a reinforcement layer located outward of the tire frame in a tire radial direction; and tread rubber located outward of the reinforcement layer in the tire radial direction, wherein

the reinforcement layer includes a reinforcement member that is coated with a resin composition containing from 50 mass% to 100 mass% of a resin material, and

the tread rubber has a loss tangent ($\tan \delta_{60°C}$) during 1% strain at 60°C and a storage modulus ($E'_{30°C}$) during 1% strain at 30°C that satisfy a relationship in formula (1) shown below:

$$27.5 \times \tan \delta_{60°C} + 1.125 \leq E'_{30°C} \leq 27.5 \times \tan \delta_{60°C} + 11.25 \quad (1)$$

where, in formula (1), $\tan \delta_{60°C}$ is the loss tangent during 1% strain at 60°C, and $E'_{30°C}$ is the storage modulus (MPa) during 1% strain at 30°C.

The tire according to the invention has excellent high-speed durability even though a resin material is used therein.

In the tire according to the invention, it is preferable that the loss tangent ($\tan \delta_{60°C}$) of the tread rubber during 1% strain at 60°C is no greater than 0.25. In such a situation, high-speed durability of the tire is further improved.

In the tire according to the invention, it is preferable that the tread rubber has a storage modulus ($E'_{0.1\%}$) during 0.1% strain at 25°C and a storage modulus ($E'_{3.0\%}$) during 3.0% strain at 25°C that have a ratio ($E'_{0.1\%}/E'_{3.0\%}$) of no greater than 6.0. In such a situation, durability of the tire under heavy loads is improved.

In one preferable example of the tire according to the invention, a rubber composition having an organic acid content of from 0.5 mass% to 2.5 mass% is used in the tread rubber. In such a situation, sufficient durability of the reinforcement layer and the tire frame can be ensured while also enabling optimal vulcanization of the rubber composition.

In another preferable example of the tire according to the invention, a rubber composition containing from 0.3 parts by mass to 5.0 parts by mass of a vulcanization accelerator relative to 100 parts by mass of a rubber component is used in the tread rubber. In such a situation, sufficient durability of the reinforcement layer and the tire frame can be ensured while also enabling optimal vulcanization of the rubber composition.

In another preferable example of the tire according to the invention, the reinforcement layer includes at least a reinforcement member that is wound in a tire circumferential direction. In such a situation, puncture resistance, cut resistance, and circumferential direction rigidity of the tire are improved.

In another preferable example of the tire according to the invention, the tire frame is formed from a resin composition containing from 50 mass% to 100 mass% of a resin material. In such a situation, the effect of tire weight reduction can be enhanced and the tire can be recycled more easily.

In another preferable example of the tire according to the invention, either or both of the reinforcement layer and the tire frame are formed using a resin composition that contains at least one of a thermoplastic resin and a thermoplastic elastomer. In such a situation, the reinforcement layer and/or the tire frame can be recycled even more easily.

Moreover, it is preferable that the at least one of the thermoplastic resin and the thermoplastic elastomer is polyamide based, polyester based, or polyurethane based. In such a situation, durability of the reinforcement layer and/or the tire frame against strain input is improved.

Preferably, the tire further comprises a carcass located outward of the tire frame and the reinforcement layer in the tire radial direction. In such a situation, problems caused by poor adhesion are less likely to occur and the amount of migration to the resin material of chemicals or the like that are compounded in the rubber can be reduced.

(Advantageous Effect)

According to the present disclosure, it is possible to provide a tire that has excellent high-speed durability even though a resin material is used therein.

BRIEF DESCRIPTION OF THE DRAWING

In the accompanying drawing,

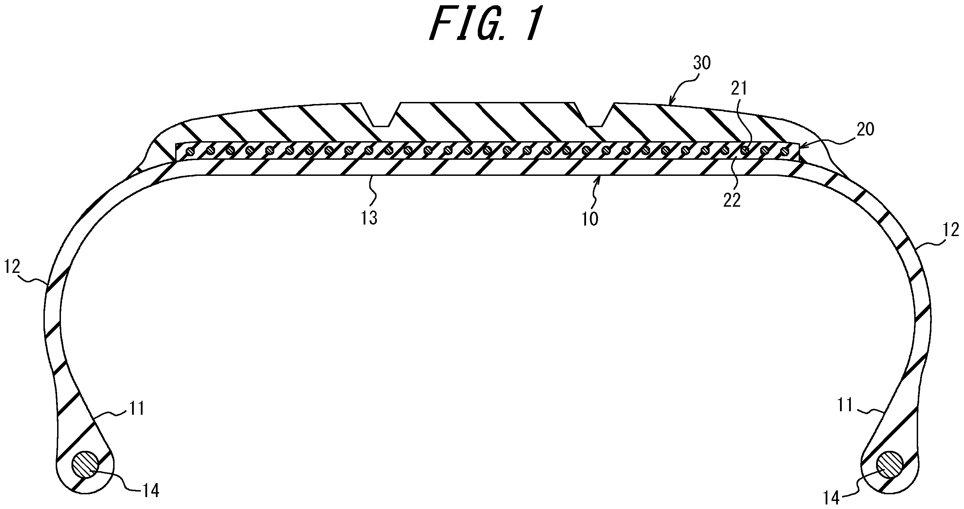

FIG. 1 is a cross-sectional view of an embodiment of the tire according to the invention.

DETAILED DESCRIPTION

The following provides an illustrative and detailed description of the tire according to the invention based on embodiments thereof.

FIG. 1 is a cross-sectional view of an embodiment of the tire according to the invention. The tire illustrated in FIG. 1 includes a tire frame 10, a reinforcement layer 20 located outward of the tire frame 10 in a tire radial direction, and tread rubber 30 located outward of the reinforcement layer 20 in the tire radial direction.

The tire frame 10 of the tire illustrated in FIG. 1 has an annular shape and, in a tire width direction cross-section thereof, includes a pair of bead portions 11, a pair of side portions 12 that continue outward from the bead portions 11 in the tire radial direction, and a crown portion 13 that continues inward from the side portions 12 in the tire width direction and that connects the side portions 12 to one another at the respective outer edges thereof in the tire radial direction. The reinforcement layer 20 is located outward of the crown portion 13 in the tire radial direction. The bead portions 11 may for example each have an annular bead core 14 embedded therein in the same way as in a normal tire. Steel cord or the like may be used in the bead cores 14.

The reinforcement layer 20 of the tire illustrated in FIG. 1 includes a reinforcement member 21 and a coating layer 22 that coats the reinforcement member 21. A resin composition containing from 50 mass% to 100 mass% of a resin material is used in the coating layer 22 of the reinforcement layer 20. Herein, when the term "resin" is used alone, "resin" is a concept that is inclusive of thermoplastic resins, thermoplastic elastomers, and thermosetting resins, but exclusive of vulcanized rubbers.

The tread rubber 30 illustrated in FIG. 1 has a loss tangent (tan $\delta_{60°C}$) during 1% strain at 60°C and a storage modulus (E'$_{30°C}$) during 1% strain at 30°C that satisfy a relationship in formula (1) shown below:

$$27.5 \times \tan \delta_{60°C} + 1.125 \leq E'_{30°C} \leq 27.5 \times \tan \delta_{60°C} + 11.25 \quad (1)$$

where, in formula (1), tan $\delta_{60°C}$ is the loss tangent during 1% strain at 60°C, and E'$_{30°C}$ is the storage modulus (MPa) during 1% strain at 30°C.

The inventor has focused attention on a loss tangent (tan $\delta_{60°C}$) during 1% strain at 60°C and a storage modulus (E'$_{30°C}$) during 1% strain at 30°C of a rubber composition used for a tread rubber 30 in a study for solving the above-mentioned problem, prepared various rubber compositions in which a loss tangent (tan $\delta_{60°C}$) during 1% strain at 60°C and a storage modulus (E'$_{30°C}$) during 1% strain at 30°C are varied, applied these rubber compositions to a tread rubber 30 of a tire, and evaluated high-speed durability and so on of the tire. Further, by plotting the evaluation results thus obtained on graphs, the inventor has found an area where a high-speed durability of a tire is especially excellent in terms of a loss tangent (tan $\delta_{60°C}$) during 1% strain at 60°C and a storage modulus (E'$_{30°C}$) during 1% strain at 30°C, expressed the area as a mathematical formula, and derived the above-described formula (1).

As a result of the adopted tread rubber 30 having a loss tangent (tan $\delta_{60°C}$) during 1% strain at 60°C and a storage modulus (E'$_{30°C}$) during 1% strain at 30°C that satisfy the relationship in formula (1), high-speed durability of the tire having the resin material used in the reinforcement layer 20 thereof can be improved. Moreover, as a result of this tread rubber 30 being adopted, handling of the tire on a dry road surface can be improved.

As previously explained, high-speed durability of a tire cannot be sufficiently improved simply by improving a low loss property of tread rubber since this reduces the storage modulus (E') of the tread rubber and increases strain of the tread rubber. However, in the case of tread rubber that satisfies the relationship in formula (1), strain of the tread and tire members around the tread can be suppressed, and high-speed durability of the tire can be sufficiently improved because E'$_{30°C}$ is at least "27.5 × tan $\delta_{60°C}$ + 1.125".

On the other hand, if the storage modulus (E') of the tread rubber is too high, a load acts on the reinforcement layer in which the resin material is used and the tire frame that is located inward of the reinforcement layer in the tire radial direction, and durability under heavy loads is reduced. However, in the case of tread rubber that satisfies the relationship in formula (1), the load acting on the reinforcement layer 20 and the tire frame 10 can be suppressed, and sufficient durability of the tire under heavy loads can be ensured because E'$_{30°C}$ is no greater than "27.5 × tan $\delta_{60°C}$ +11.25".

The loss tangent (tan $\delta_{60°C}$) of the tread rubber 30 during 1% strain at 60°C is preferably no greater than 0.25, and more preferably no greater than 0.22. When tan $\delta_{60°C}$ of the tread rubber 30 is no greater than 0.25, heat buildup in the tread rubber 30 during high-speed running is reduced and high-speed durability of the tire is further improved.

There is no restriction on the lower limit for tan $\delta_{60°C}$ of the tread rubber 30 since high-speed durability of the tire continues to improve as tan $\delta_{60°C}$ becomes smaller.

A ratio (E'$_{0.1\%}$/E'$_{3.0\%}$) of a storage modulus (E'$_{0.1\%}$) of the tread rubber 30 during 0.1% strain at 25°C and a storage modulus (E'$_{3.0\%}$) of the tread rubber 30 during 3.0% strain at 25°C is preferably no greater than 6.0, and more preferably no greater than 3.5. In a situation in which E'$_{0.1\%}$/E'$_{3.0\%}$ of the tread rubber 30 is no greater than 6.0, strain dependence of the storage modulus of the tread rubber 30 is low. Accordingly, the storage modulus only changes by a small amount even when a large-amplitude input acts on the reinforcement layer 20 in which the resin material is used and the tire frame 10 that is located inward of the reinforcement layer 20 in the tire radial direction, and, as a result, durability of the tire under heavy loads can be improved.

A rubber composition in which the types and blending ratio of rubber components and the types and amounts of compounding agents are adjusted such that post-vulcanization physical properties of the rubber composition satisfy the relationship in formula (1) can be used in the tread rubber 30.

Examples of rubber components that can be used include natural rubber (NR) and synthetic diene-based rubbers such as synthetic isoprene rubber (IR), polybutadiene rubber (BR), styrene-butadiene copolymer rubber (SBR), and styrene-isoprene copolymer rubber (SIR), although other types of synthetic rubbers can also be used. One of such rubber components may be used individually, or two or more of such rubber components may be used as a blend.

Examples of compounding agents that can be used in the rubber composition include compounding agents that are normally used in the rubber industry such as fillers, stearic acid, softeners, antioxidants, zinc oxide, vulcanization accelerators, and vulcanizing agents such as sulfur.

Examples of fillers that can be used include carbon black and silica.

Examples of softeners that can be used include mineral-derived mineral oil, petroleum-derived aromatic oil, paraffinic oil, and naphthenic oil, and natural product-derived palm oil.

Examples of vulcanizing agents that can be used include sulfur.

Examples of vulcanization accelerators that can be used include thiazole vulcanization accelerators such as 2-mercaptobenzothiazole (M), dibenzothiazolyl disulfide (DM), N-cyclohexyl-2-benzothiazolylsulfenamide (CZ), and N-tert-butyl-2-benzothiazolylsulfenamide (NS), and guanidine vulcanization accelerators such as 1,3-diphenylguanidine (DPG).

The rubber composition can for example be produced by kneading the rubber component with various compounding agents, which are appropriately selected as necessary, using a Banbury mixer, a roller, or the like, and then performing warming, extrusion, and so forth. The tread rubber can then be produced by shaping the rubber composition into a desired shape and carrying out vulcanization. Vulcanization of the tread rubber may be carried out after shaping the tire from the tire frame, the reinforcement layer, and the unvulcanized tread rubber, or the unvulcanized tread rubber may be vulcanized in advance before assembling the tire from the tire frame, the reinforcement layer, and the vulcanized tread rubber.

The organic acid content of the rubber composition used in the tread rubber 30 is preferably from 0.5 mass% to 2.5 mass%, and more preferably from 1.0 mass% to 2.0 mass%. In the rubber composition used in the tread rubber 30, an organic acid content of at least 0.5 mass% enables optimal vulcanization of the rubber composition, whereas an organic acid content of no greater than 2.5 mass% limits the influence of the organic acid on the reinforcement layer 20 in which the resin material is used and the tire frame 10 that is located inward of the reinforcement layer 20 in the tire radial direction, and thereby ensures sufficient durability of the reinforcement layer 20 and the tire frame 10.

It should be noted that besides stearic acid or the like that may be used as a compounding agent as previously described, the organic acid in the rubber composition may for example include an organic acid contained in natural rubber or the like that may be used as the rubber component.

The amount of a vulcanization accelerator that is compounded relative to 100 parts by mass of the rubber component in the rubber composition used in the tread rubber 30 is preferably from 0.3 parts by mass to 5.0 parts by mass, and more preferably from 1.0 parts by mass to 4.0 parts by mass. In the rubber composition used in the tread rubber 30, compounding of at least 0.3 parts by mass of the vulcanization accelerator relative to 100 parts by mass of the rubber component enables optimal vulcanization of the rubber composition, whereas compounding of no greater than 5.0 parts by mass limits the influence of the vulcanization accelerator on the reinforcement layer 20 in which the resin material is used and the tire frame 10 that is located inward of the reinforcement layer 20 in the tire radial direction, and thereby ensures sufficient durability of the reinforcement layer 20 and the tire frame 10.

The reinforcement layer 20 includes the reinforcement member 21 and the coating layer 22 that coats the reinforcement member 21, and preferably includes at least a reinforcement member 21 that is wound in the tire circumferential direction as in the tire illustrated in FIG. 1. As a result of the reinforcement member 21 being arranged such as to wind in the tire circumferential direction, puncture resistance, cut resistance, and circumferential direction rigidity of the tire can be improved and, as a result of this improved circumferential direction rigidity, creeping of the tire frame can be inhibited.

Although the reinforcement layer 20 may be used in combination with another reinforcement member such as a two-layer intersecting belt member, the reinforcement layer 20 is preferably used alone from a viewpoint of weight reduction.

The reinforcement layer 20 can for example be produced by coating the reinforcement member 21 with the resin composition and then arranging the resin composition-coated reinforcement member 21 outward of the tire frame 10 in the tire radial direction.

Examples of the reinforcement member 21 used in the reinforcement layer 20 include steel cord, organic fiber cord, and carbon fiber cord, among which, steel cord is preferable in terms of having an excellent effect on improving circumferential direction rigidity of the tire.

A resin composition containing from 50 mass% to 100 mass% of a resin material is used in the coating layer 22 of the reinforcement layer 20. In the resin composition used in the reinforcement layer, a resin material content of at least 50 mass% enhances the effect of tire weight reduction and makes the tire easier to recycle. In a situation in which a reinforcement member is coated with a rubber, it is difficult to separate the reinforcement member and the rubber simply by heating. However, in the case of the coating layer 22 in which the resin composition containing from 50 mass% to 100 mass% of the resin material is used, the reinforcement member 21 and the coating layer 22 can be separated simply by heating, which is beneficial in terms of tire recycling. From a viewpoint of ease of recycling, the resin composition used in the coating layer 22 of the reinforcement layer 20 preferably contains from 60 mass% to 100 mass% of the resin material, and more preferably contains from 70 mass% to 100 mass% of the resin material. Moreover, in the case of the coating layer 22 in which the resin composition containing from 50 mass% to 100 mass% of the resin material is used, a harder reinforcement member can be used, corner power can be obtained, and handling can be enhanced.

It should be noted that the reinforcement layer 20 in the tire according to the invention is formed by coating the reinforcement member 21 with the resin composition containing from 50 mass% to 100 mass% of the resin material and is, therefore, different from a normal tire carcass that is formed by coating a reinforcement member with a rubber.

Herein, the resin material does not include a rubber and may for example be a thermoplastic resin, a thermoplastic elastomer, or a thermosetting resin.

The resin composition used in the reinforcement layer preferably contains at least one of a thermoplastic resin and a thermoplastic elastomer, and more preferably contains a thermoplastic elastomer. The reinforcement layer can be recycled even more easily when the reinforcement layer is formed using a thermoplastic resin and/or a thermoplastic elastomer. Moreover, durability of the reinforcement layer against strain input is improved when the reinforcement layer is formed using a thermoplastic elastomer.

Herein, thermoplastic resins and thermoplastic elastomers are polymeric compounds forming materials that soften and flow in accompaniment to an increase in temperature, and that adopt a relatively hard and strong state when cooled. In the present specification, thermoplastic resins and thermoplastic elastomers are distinguished between by using the term "thermoplastic elastomer" to refer to a polymeric compound forming a material that softens and flows in accompaniment to an increase in temperature, that adopts a relatively hard and strong state when cooled, and that has rubbery elasticity, and the term "thermoplastic resin" is used to refer to a polymeric compound forming a material that softens and flows in accompaniment to an increase in temperature, that adopts a relatively hard and strong state when cooled, and that does not have rubbery elasticity.

Examples of thermoplastic resins that can be used include a polyolefin-based thermoplastic resin, a polystyrene-based thermoplastic resin, a polyamide-based thermoplastic resin, a polyester-based thermoplastic resin, and a polyurethane-based thermoplastic resin. Among these thermoplastic resins, a polyamide-based thermoplastic resin, a polyester-based thermoplastic resin, and a polyurethane-based thermoplastic resin are preferable from a viewpoint of durability against strain input.

Examples of thermoplastic elastomers that can be used include a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), and a dynamic crosslink thermoplastic elastomer (TPV). Among these thermoplastic elastomers, a polyamide-based thermoplastic elastomer (TPA), a polyurethane-based thermoplastic elastomer (TPU), and a polyester-based thermoplastic elastomer (TPC) are preferable from a viewpoint of durability against strain input.

One of such thermoplastic resins or thermoplastic elastomers may be used individually, or a combination of two or more of such thermoplastic resins and/or thermoplastic elastomers may be used as a blend. Although the melting point (or the softening point) of the actual resin material is normally approximately 100°C to 350°C, and preferably approximately 100°C to 250°C, from a viewpoint of achieving a balance of both tire productivity and durability, the melting point (or the softening point) is preferably approximately 120°C to 250°C, and more preferably 120°C to 200°C. Through use of a material having a melting point (or a softening point) in the temperature range described above, the effects obtained due to the tread rubber prescribed in the present disclosure can be enhanced while ensuring suitable productivity.

The polyamide-based thermoplastic elastomer (TPA) is a thermoplastic resin material formed by a copolymer that is an elastic polymeric compound having a polymer composing hard segments that are crystalline and have a high melting point and a polymer composing soft segments that are amorphous and have a low glass transition temperature, wherein amide bonds (-CONH-) are present in the main chain of the polymer composing the hard segments.

The polyamide-based thermoplastic elastomer may for example be a material in which the hard segments that are crystalline and have a high melting point are composed by at least a polyamide, and the soft segments that are amorphous and have a low glass transition temperature are composed by another polymer (for example, a polyester or polyether). Besides the hard segments and the soft segments, a chain extender such as a dicarboxylic acid may be used in the polyamide-based thermoplastic elastomer.

The polyamide that forms the hard segments of the polyamide-based thermoplastic elastomer (TPA) may for example be a polycondensate of an ω-aminocarboxylic acid or a lactam, or a copolycondensate of a diamine and a dicarboxylic acid.

Examples of the ω-aminocarboxylic acid include 6-aminocaproic acid, 7-aminoheptanoic acid, 8-aminooctanoic acid, 10-aminocapric acid, 11-aminoundecanoic acid, and 12-aminododecanoic acid.

Examples of the lactam include lauryl lactam, ε-caprolactam, ω-enantholactam, and 2-pyrrolidone.

Examples of the diamine include ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, and m-xylylenediamine.

Examples of the dicarboxylic acid include oxalic acid, succinic acid, glutaric acid, adipic acid, pimelic acid, suberic acid, azelaic acid, sebacic acid, and dodecanedioic acid.

The polymer that forms the soft segments of the polyamide-based thermoplastic elastomer (TPA) may for example be a polyester or a polyether such as polyethylene glycol, polypropylene glycol, polytetramethylene ether glycol, or an ABA triblock polyether.

Preferable examples of combinations of the hard segments and the soft segments of the polyamide-based thermoplastic elastomer (TPA) include a combination of a ring-opening polycondensate of lauryl lactam and polyethylene glycol, a combination of a ring-opening polycondensate of lauryl lactam and polypropylene glycol, a combination of a ring-opening polycondensate of lauryl lactam and polytetramethylene ether glycol, and a combination of a ring-opening polycondensate of lauryl lactam and an ABA triblock polyether. The combination of a ring-opening polycondensate of lauryl lactam and an ABA triblock polyether is particularly preferable.

The polyamide-based thermoplastic elastomer can be synthesized by copolymerizing the polymer that forms the hard segments and the polymer that forms the soft segments by a commonly known method. The polyamide-based thermoplastic elastomer may be a commercially available product. Examples include products from the "UBESTA XPA" series produced by Ube Industries, Ltd. (for example, XPA9063X1, XPA9055X1, XPA9048X2, XPA9048X1, XPA9040X1, XPA9040X2, and XPA9044) and products from the "VESTAMID" series produced by Daicel-Evonik Ltd. (for example, E40-S3, E47-S1, E47-S3, E55-S1, E55-S3, EX9200, and E50-R2).

The polyurethane-based thermoplastic elastomer (TPU) may for example be a material in which at least polyurethane composes hard segments that form pseudo-crosslinks by physical aggregation and another polymer composes soft segments that are amorphous and have a low glass transition temperature.

The soft segments of the polyurethane-based thermoplastic elastomer (TPU) may for example be formed using a high molecular weight diol compound such as polyethylene glycol, polypropylene glycol, polytetramethylene ether glycol, poly(butylene adipate) diol, poly-$\varepsilon$-caprolactone diol, or poly(hexamethylenecarbonate) diol; and a diisocyanate compound such as 1,2-ethylene diisocyanate, 1,3-propylene diisocyanate, 1,4-butane diisocyanate, 1,6-hexamethylene diisocyanate, 1,4-cyclohexane diisocyanate, 4,4-cyclohexane diisocyanate, 4,4'-diphenylmethane diisocyanate, or tolylene diisocyanate.

The hard segments of the polyurethane-based thermoplastic elastomer (TPU) may for example be formed using a low molecular weight diol compound such as ethylene glycol, propylene glycol, trimethylene glycol, 1,4-butanediol, 1,3-butanediol, 1,5-pentanediol, 1,6-hexanediol, 1,7-heptanediol, 1,8-octanediol, 1,9-nonanediol, 1,10-decanediol, cyclopentane-1,2-diol, cyclohexane-1,2-diol, cyclohexane-1,3-diol, cyclohexane-1,4-diol, cyclohexane-1,4-dimethanol, hydroquinone, resorcinol, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenyl ether, 4,4'-dihydroxydiphenyl sulfide, 4,4'-dihydroxydiphenyl sulfone, 4,4'-dihydroxybenzophenone, 4,4'-dihydroxydiphenylmethane, bisphenol A, 1,1-di(4-hydroxyphenyl)cyclohexane, 1,2-bis(4-hydroxyphenoxy)ethane, 1,4-dihydroxynaphthalene, or 2,6-dihydroxynaphthalene; and a diisocyanate compound such as 1,2-ethylene diisocyanate, 1,3-propylene diisocyanate, 1,4-butane diisocyanate, 1,6-hexamethylene diisocyanate, 1,4-cyclohexane diisocyanate, 4,4-cyclohexane diisocyanate, 4,4'-diphenylmethane diisocyanate, or tolylene diisocyanate.

The polyurethane-based thermoplastic elastomer can be synthesized by copolymerizing the polymer that forms the hard segments and the polymer that forms the soft segments by a commonly known method. The polyurethane-based thermoplastic elastomer may be a commercially available product. Examples include products from the "Elastollan" series produced by BASF (for example, ET680, ET880, ET690, and ET890), products from the "KURAMIRON U" series produced by Kuraray Co., Ltd. (for example, products in the 2000s, 3000s, 8000s, and 9000s), and products from the "Miractran" series produced by Nippon Miractran Co., Ltd. (for example, XN-2001, XN-2004, P390RSUP, P480RSUI, P26MRNAT, E490, E590, and P890).

The polyester-based thermoplastic elastomer (TPC) is a thermoplastic resin material formed by a copolymer that is an elastic polymeric compound having a polymer composing hard segments that are crystalline and have a high melting point and a polymer composing soft segments that are amorphous and have a low glass transition temperature, wherein a polyester resin is included as the polymer composing the hard segments.

An aromatic polyester can be used as a crystalline polyester that forms the hard segments of the polyester-based thermoplastic elastomer (TPC). The aromatic polyester can for example be formed from an aliphatic diol and an aromatic dicarboxylic acid or ester-forming derivative thereof. The aromatic polyester that forms the hard segments may for example be polyethylene terephthalate, polybutylene terephthalate, polystyrene terephthalate, polyethylene naphthalate, or polybutylene naphthalate, and is preferably polybutylene terephthalate.

One preferable example of the aromatic polyester that forms the hard segments is polybutylene terephthalate derived from 1,4-butanediol and either or both of terephthalic acid and dimethyl terephthalate. Furthermore, the aromatic polyester may be a polyester that is derived from a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative of any of these dicarboxylic acids; and a diol component such as ethylene glycol, trimethylene glycol, pentamethylene glycol, hexamethylene glycol, neopentyl glycol, decamethylene glycol, 1,4-cyclohexanedimethanol, tricyclodecane dimethylol, xylylene glycol, bis(p-hydroxy)diphenyl, bis(p-hydroxyphenyl)propane, 2,2-bis[4-(2-hydroxyethoxy)phenyl]propane, bis [4-(2-hydroxy)phenyl] sulfone, 1,1-bis[4-(2-hydroxyethoxy)phenyl]cyclohexane, 4,4'-dihydroxy-p-terphenyl, or 4,4'-dihydroxy-p-quaterphenyl, or may be a copolymer polyester in which two or more types of dicarboxylic acid components and diol components such as described above are used in combination.

The polymer that forms the soft segments of the polyester-based thermoplastic elastomer (TPC) may for example be a polymer selected from aliphatic polyethers and aliphatic polyesters.

Examples of aliphatic polyethers that can be used include poly(ethylene oxide) glycol, poly(propylene oxide) glycol, poly(tetramethylene oxide) glycol, poly(hexamethylene oxide) glycol, a copolymer of ethylene oxide and propylene oxide, an ethylene oxide addition polymer of poly(propylene oxide) glycol, and a copolymer of ethylene oxide and tetrahydrofuran.

Examples of aliphatic polyesters that can be used include poly($\varepsilon$-caprolactone), polyenantholactone, polycaprylolactone, polybutylene adipate, and polyethylene adipate.

Among the aliphatic polyethers and aliphatic polyesters listed above, poly(tetramethylene oxide) glycol, an ethylene oxide addition polymer of poly(propylene oxide) glycol, poly($\varepsilon$-caprolactone), polybutylene adipate, polyethylene adipate, and the like are preferable from a viewpoint of elasticity characteristics of the resultant copolymer.

The polyester-based thermoplastic elastomer can be synthesized by copolymerizing the polymer that forms the hard segments and the polymer that forms the soft segments by a commonly known method. The polyester-based thermoplastic elastomer may be a commercially available product. Examples include products from the "Hytrel" series produced by Du Pont-Toray Co., Ltd. (for example, 3046, 5557, 5577, 6347, 4047, 4767, and 4777) and products from the "Pelprene" series produced by Toyobo Co., Ltd. (for example, P30B, P40B, P40H, P55B, P70B, P150B, P280B, P450B, P150M, S1001, S2001, S5001, S6001, and S9001).

Examples of thermosetting resins that can be used include phenolic resins, epoxy resins, melamine resins, and urea resins.

In addition to the resin material, the resin composition may contain a rubber and additives such as various fillers (for example, silica, calcium carbonate, and clay), antioxidants, oils, plasticizers, colorants, anti-weathering agents, and reinforcing materials as desired.

The tire frame 10 may be a normal tire case that is formed mainly from a rubber, or may be formed from a resin composition containing from 50 mass% to 100 mass% of a resin material.

Adhesiveness of the coating layer 22 and the reinforcement member 21 of the reinforcement layer 20 may be improved by providing an adhesive layer between the coating layer 22 and the reinforcement member 21 or by forming the coating layer 22 as a laminate of a plurality of different materials. A thermoplastic resin, a thermoplastic elastomer, a solvent-based adhesive, an aqueous adhesive, a thermosetting resin, or the like can be used in the adhesive layer.

The tire case formed mainly from a rubber is for example a tire case that includes a pair of bead portions, a pair of side portions that continue outward from the bead portions in the tire radial direction, a crown portion that continues inward from the side portions in the tire width direction and that connects the side portions to one another at the respective outer edges thereof in the tire radial direction, and a carcass that extends in a toroidal shape between bead cores that are each embedded in a corresponding one of the bead portions, wherein the tire case is formed mainly from a rubber with the exception of reinforcement cord (for example, organic fiber cord or steel cord) in the bead cores or the carcass.

On the other hand, in a situation in which the tire frame 10 is formed from a resin composition containing from 50 mass% to 100 mass% of a resin material, the resin composition used in the tire frame 10 may be the same or different to the previously described resin composition that is used in the coating layer 22 of the reinforcement layer 20. However, it is preferable that these resin compositions are the same when adhesiveness and differences in physical properties of the coating layer 22 and the tire frame 10 are taken into account.

In a situation in which the tire frame 10 is formed from a resin composition containing from 50 mass% to 100 mass% of a resin material, the thickness of the tire frame 10 at a tire maximum width portion when unloaded is normally from 0.5 mm to 2.5 mm, and preferably from 1 mm to 2 mm. Therefore, the tire frame 10 is different from a resin-made inner liner that may be provided at a tire inner surface of a tire case formed mainly from a rubber since this inner liner normally has a thickness of no greater than 100 $\mu$m.

It should be noted that even in a situation in which the tire frame 10 is formed from a resin composition containing from 50 mass% to 100 mass% of a resin material, the tire may include a separately provided carcass formed by cord, such as organic fiber cord or steel cord, coated by a rubber in the same way as in a normal tire. The carcass may be located outward or inward of the reinforcement layer 20 in the tire radial direction. It is more preferable for the carcass to be located outward of the reinforcement layer 20 since this means that the reinforcement layer 20 formed by coating the reinforcement member 21 with the resin composition does not become sandwiched between rubber members, and, as a result, the number of interfaces between resin and rubber is reduced such that problems caused by poor adhesion are less likely to occur and the amount of unintended migration to the resin material of chemicals or the like that are compounded in the rubber can be reduced. Moreover, from a viewpoint of heat buildup, it is preferable that the carcass is located outward of the reinforcement member 21 such that heat transfer only occurs in one direction relative to the reinforcement member 21.

In the resin composition optionally used in the tire frame 10, a resin material content of at least 50 mass% makes it easier to recycle the tire. From a viewpoint of ease of recycling, it is preferable that the resin composition optionally used in the tire frame 10 contains from 90 mass% to 100 mass% of the resin material.

The resin composition optionally used in the tire frame 10 preferably contains at least one of a thermoplastic resin and a thermoplastic elastomer. Formation of the tire frame 10 using a thermoplastic resin and/or thermoplastic elastomer makes recycling even easier, enables simplification of structure compared to conventional rubber-made tires, and enables further reduction in weight of the tire.

The same thermoplastic resins and thermoplastic elastomers as listed for the previously described resin composition used in the coating layer 22 of the reinforcement layer 20 can also be used for the resin composition optionally used in the tire frame 10. Moreover, in the same way as for the resin composition used in the coating layer 22 of the reinforcement layer 20, it is preferable to use a polyamide-based thermoplastic resin, a polyester-based thermoplastic resin, a polyurethane-based thermoplastic resin, a polyamide-based thermoplastic elastomer (TPA), a polyurethane-based thermoplastic elastomer (TPU), or a polyester-based thermoplastic elastomer (TPC) for the resin composition optionally used in the tire frame 10. Furthermore, additives other than the resin material that can be added are also the same as for the resin composition used in the coating layer 22 of the reinforcement layer 20.

The tire frame 10 in which this resin composition is used can be produced in accordance with the second embodiment in JP 2012-046030 A (PTL 1). For example, the tire frame can be produced by preparing halves of the tire frame by injection molding, placing the halves in opposition to one another, and joining the halves together by joining in which pressing is preferably carried out at a temperature that is at least as high as the melting point of the resin material in the resin composition that is used.

EXAMPLES

The following describes the tire according to the invention in more detail through examples. However, the tire according to the invention is not in any way limited by the following examples.

(Examples 1-18 and Comparative Examples 1-6)

In each of Examples 1-18 and Comparative Examples 1-6, a tire frame (tire case) was produced in accordance with the second embodiment in JP 2012-046030 A (PTL 1) by preparing halves of the tire frame by injection molding using a polyamide-based thermoplastic elastomer as a resin material, placing the halves in opposition to one another, and joining the halves by pressing at a temperature that was at least as high as the melting point of the polyamide-based thermoplastic elastomer that was used.

Next, a reinforcement layer was provided outward of the tire frame in a tire radial direction by spirally winding, in a tire circumferential direction, steel cord that had been coated with a polyamide-based thermoplastic elastomer.

Tread rubber formed from a rubber composition of a formulation shown in Tables 1 and 2 was then provided outward of the reinforcement layer in the tire radial direction, and vulcanization was subsequently carried out. Through this process, a tire (pneumatic tire) was produced.

The produced tire frame had a thickness of 2 mm at a tire maximum width portion when unloaded.

In the produced tire, the tire frame and the coating layer of the steel cord were each formed from a polyamide-based thermoplastic elastomer and the percentage of resin material therein was 100 mass%.

The following methods were used in order to measure and calculate the organic acid content in the rubber composition used in the tread rubber, the loss tangent (tan $\delta_{60°C}$) of the tread rubber during 1% strain at 60°C, the storage modulus (E'$_{30°C}$) of the tread rubber during 1% strain at 30°C, and the ratio (E'$_{0.1\%}$/E'$_{3.0\%}$) of the storage modulus (E'$_{0.1\%}$) of the tread rubber during 0.1% strain at 25°C and the storage modulus (E'$_{3.0\%}$) of the tread rubber during 3.0% strain at 25°C.

(1) Measurement of organic acid content in rubber composition used in tread rubber

The amount of organic acid (organic acid content) in the rubber composition was obtained in accordance with JIS K6237:2012.

(2) Measurement of tan $\delta_{60°C}$, E'$_{30°C}$, and E'$_{0.1\%}$/E'$_{3.0\%}$

A rubber sheet of 50 mm in length, 5 mm in width, and 2 mm in thickness was cut from the tread rubber of the produced tire. The loss tangent (tan $\delta_{60°C}$) during 1% strain at 60°C, the storage modulus (E'$_{30°C}$) during 1% strain at 30°C, the storage modulus (E'$_{0.1\%}$) during 0.1% strain at 25°C, and the storage modulus (E'$_{3.0\%}$) during 3.0% strain at 25°C were measured with respect to the rubber sheet under conditions of an initial load of 160 mg and a frequency of 52 Hz using a spectrometer produced by Ueshima Seisakusho Co., Ltd. The ratio (E'$_{0.1\%}$/E'$_{3.0\%}$) of the storage modulus (E'$_{0.1\%}$) during 0.1% strain at 25°C and the storage modulus (E'$_{3.0\%}$) during 3.0% strain at 25°C was calculated. The results are shown in Tables 1 and 2.

The produced tire was evaluated by the following methods in order to evaluate high-speed drum durability, heavy-load drum durability, and handling on a dry road surface.

(3) High-speed drum durability

Each sample tire was adjusted to an internal pressure of 300 kPa at 25°C ± 2°C indoors, and after the tire had been left for 24 hours, the air pressure of the tire was readjusted. A load of 400 kg was loaded onto the tire and the tire was run on a drum of approximately 3 m in diameter while increasing the speed from 100 km/h by 10 km/h every 10 minutes. The distance at which the tire failed was taken to be the durable distance. This distance was expressed as an index value relative to the value for Example 2, which was set as 100. A higher index value indicates that the tire has better high-speed durability.

(4) Heavy-load drum durability

An indoor drum test machine was used in order to conduct a test with a speed of 60 km/h, an internal pressure of 900 kPa, and an initial load equivalent to 165% of the maximum load capability stipulated by The European Tire and Rim Technical Organization (ETRTO) Standards Manual, and the running distance until failure occurred was measured. The running distance was expressed as an index value relative to the running distance for Example 2, which was set as 100. A higher index value indicates that the tire has better durability under heavy loads.

(5) Handling on dry road surface

Sample tires were fitted onto a test vehicle and an actual vehicle test on a dry road surface was conducted in which handling was subjectively evaluated and categorized as from A to C by the driver. The evaluation standard was as shown below.

Good handling: A

Normal handling: B

Poor handling: C

Table 1

| | | | Example 1 | Comparative Example 1 | Comparative Example 2 | Comparative Example 3 | Example 2 | Example 3 | Comparative Example 4 | Comparative Example 5 | Comparative Example 6 | Example 4 | Example 5 | Example 6 |
|---|---|---|---|---|---|---|---|---|---|---|---|---|---|---|
| Tire frame material | | | TPA *7 | TPA *7 | TPA *7 | TPA *7 | TPA *7 | TPA *7 | TPA *7 | TPA *7 | TPA *7 | TPA *7 | TPA *7 | TPA *7 |
| Material of coating layer of reinforcement layer | | | TPA *7 | TPA *7 | TPA *7 | TPA *7 | TPA *7 | TPA *7 | TPA *7 | TPA *7 | TPA *7 | TPA *7 | TPA *7 | TPA *7 |
| Tread rubber formulation | NR *1 | Parts by mass | 20 | 20 | 20 | 20 | 20 | 20 | 20 | 20 | 20 | 20 | 20 | 20 |
| | SBR *2 | | 80 | 80 | 80 | 80 | 80 | 80 | 80 | 80 | 80 | 80 | 80 | 80 |
| | Carbon black *3 | | 10 | 10 | 20 | 80 | 20 | 80 | 10 | 20 | 80 | 20 | 80 | 100 |
| | Silica *4 | | 50 | 50 | 55 | 0 | 55 | 0 | 50 | 55 | 0 | 55 | 0 | 0 |
| | Oil *5 | | 22 | 5 | 5 | 5 | 15 | 15 | 25 | 25 | 25 | 20 | 20 | 25 |
| | Zinc oxide | | 2.5 | 2.5 | 2.5 | 2.5 | 2.5 | 2.5 | 2.5 | 2.5 | 2.5 | 2.5 | 2.5 | 2.5 |
| | Sulfur | | 1.7 | 1.7 | 1.7 | 1.7 | 1.7 | 1.7 | 1.4 | 1.4 | 1.4 | 1.8 | 1.8 | 1.8 |
| | Stearic acid | | 1.0 | 1.0 | 1.0 | 1.0 | 1.0 | 1.0 | 1.0 | 1.0 | 1.0 | 1.0 | 1.0 | 1.0 |
| | Vulcanization accelerator *6 | | 3.45 | 3.45 | 3.45 | 3.45 | 3.45 | 3.45 | 3.45 | 3.45 | 3.45 | 3.45 | 3.45 | 3.45 |
| Organic acid content in rubber composition for tread rubber | | Mass% | 1.39 | 1.39 | 1.39 | 1.39 | 1.39 | 1.39 | 1.39 | 1.39 | 1.39 | 1.39 | 1.39 | 1.39 |
| Tread rubber physical properties | $\tan \delta_{60°C}$ | - | 0.17 | 0.15 | 0.20 | 0.23 | 0.20 | 0.24 | 0.18 | 0.21 | 0.24 | 0.20 | 0.22 | 0.26 |
| | $E'_{30°C}$ | MPa | 9.7 | 16.0 | 17.5 | 19.0 | 15.5 | 16.0 | 6.0 | 6.5 | 7.0 | 7.5 | 7.5 | 9.0 |
| | $27.5 \times \tan \delta_{60°C} + 1.125$ | - | 5.8 | 5.3 | 6.6 | 7.5 | 6.6 | 7.7 | 6.1 | 6.9 | 7.7 | 6.6 | 7.2 | 8.3 |
| | $27.5 \times \tan \delta_{60°C} + 11.25$ | - | 15.9 | 15.4 | 16.8 | 17.6 | 16.8 | 17.9 | 16.2 | 17.0 | 17.9 | 16.8 | 17.3 | 18.4 |
| | $E'_{0.1\%}/E'_{3.0\%}$ | - | 1.6 | 1.3 | 2.5 | 3.3 | 1.5 | 2.7 | 1.6 | 2.6 | 3.3 | 2.5 | 3.2 | 3.2 |

EP 3 466 720 B1

| | | | Example 1 | Comparative Example 1 | Comparative Example 2 | Comparative Example 3 | Example 2 | Example 3 | Comparative Example 4 | Comparative Example 5 | Comparative Example 6 | Example 4 | Example 5 | Example 6 |
|---|---|---|---|---|---|---|---|---|---|---|---|---|---|---|
| Tire performance | High-speed drum durability | Index value | 105 | 107 | 102 | 101 | 100 | 101 | 99 | 98 | 97 | 102 | 101 | 100 |
| | Heavy-load drum durability | Index value | 105 | 99 | 97 | 95 | 100 | 100 | 105 | 103 | 103 | 103 | 103 | 102 |
| | Handling on dry road surface | - | A | A | A | A | A | A | A | A | A | A | A | A |

Table 2

| | | | Example 7 | Example 8 | Example 9 | Example 10 | Example 11 | Example 12 | Example 13 | Example 14 | Example 15 | Example 16 | Example 17 | Example 18 |
|---|---|---|---|---|---|---|---|---|---|---|---|---|---|---|
| Tire frame material | | | TPA *7 | TPA *7 | TPA *7 | TPA *7 | TPA *7 | TPA *7 | TPA *7 | TPA *7 | TPA *7 | TPA *7 | TPA *7 | TPA *7 |
| Material of coating layer of reinforcement layer | | | TPA *7 | TPA *7 | TPA *7 | TPA *7 | TPA *7 | TPA *7 | TPA *7 | TPA *7 | TPA *7 | TPA *7 | TPA *7 | TPA 7 |
| Tread rubber formulation | NR *1 | Parts by mass | 0 | 0 | 20 | 20 | 20 | 20 | 20 | 20 | 20 | 20 | 20 | 20 |
| | SBR *2 | | 100 | 100 | 80 | 80 | 80 | 80 | 80 | 80 | 80 | 80 | 80 | 80 |
| | Carbon black *3 | | 80 | 80 | 10 | 10 | 10 | 10 | 10 | 10 | 10 | 10 | 10 | 10 |
| | Silica *4 | | 0 | 0 | 50 | 50 | 50 | 50 | 50 | 50 | 50 | 50 | 50 | 50 |
| | Oil *5 | | 25 | 25 | 22 | 22 | 22 | 22 | 22 | 22 | 22 | 22 | 22 | 22 |
| | Zinc oxide | | 2.5 | 2.5 | 2.5 | 2.5 | 2.5 | 2.5 | 2.5 | 2.5 | 2.5 | 2.5 | 2.5 | 2.5 |
| | Sulfur | | 1.5 | 1.5 | 1.7 | 1.7 | 1.7 | 1.7 | 1.7 | 1.7 | 1.7 | 1.7 | 1.7 | 1.7 |
| | Stearic acid | | 1.0 | 1.0 | 0.3 | 0.6 | 1.7 | 2.0 | 1.5 | 1.0 | 1.0 | 1.0 | 1.0 | 1.0 |
| | Vulcanization accelerator *6 | | 3.45 | 3.45 | 3.45 | 3.45 | 3.45 | 3.45 | 3.45 | 0.20 | 0.30 | 0.50 | 2.20 | 1.80 |
| Organic acid content in rubber composition for tread rubber | | Mass% | 1.39 | 1.39 | 0.35 | 0.52 | 2.50 | 2.61 | 1.96 | 1.39 | 1.39 | 1.39 | 1.39 | 1.39 |
| Tread rubber physical properties | $\tan \delta_{60°C}$ | - | 0.24 | 0.24 | 0.17 | 0.17 | 0.17 | 0.17 | 0.17 | 0.17 | 0.17 | 0.17 | 0.17 | 0.17 |
| | $E'_{30°C}$ | MPa | 16.0 | 16.0 | 9.7 | 9.7 | 9.7 | 9.7 | 9.7 | 9.7 | 9.7 | 9.7 | 9.7 | 9.7 |
| | $27.5 \times \tan \delta_{60°C} + 1.125$ | - | 7.7 | 7.7 | 5.8 | 5.8 | 5.8 | 5.8 | 5.8 | 5.8 | 5.8 | 5.8 | 5.8 | 5.8 |
| | $27.5 \times \tan \delta_{60°C} + 11.25$ | - | 17.9 | 17.9 | 15.9 | 15.9 | 15.9 | 15.9 | 15.9 | 15.9 | 15.9 | 15.9 | 15.9 | 15.9 |
| | $E'_{0.1\%}/E'_{3.0\%}$ | - | 5.8 | 6.3 | 1.6 | 1.6 | 1.6 | 1.6 | 1.6 | 1.6 | 1.6 | 1.6 | 1.6 | 1.6 |

EP 3 466 720 B1

13

|  |  |  | Example 7 | Example 8 | Example 9 | Example 10 | Example 11 | Example 12 | Example 13 | Example 14 | Example 15 | Example 16 | Example 17 | Example 18 |
|---|---|---|---|---|---|---|---|---|---|---|---|---|---|---|
| Tire perform-ance | High-speed drum durability | Index value | 102 | 102 | 102 | 104 | 105 | 105 | 105 | 102 | 103 | 103 | 105 | 105 |
|  | Heavy-load drum durability | Index value | 101 | 100 | 105 | 105 | 103 | 102 | 104 | 105 | 105 | 105 | 102 | 103 |
|  | Handling on dry road surface | - | A | A | A | A | A | A | A | A | A | A | A | A |

*1 NR: Natural rubber, produced in Indonesia, product name "SIR20" *2 SBR: Styrene-butadiene copolymer rubber, produced by JSR Corporation, product name "#1500" *3 Carbon black: Produced by Asahi Carbon Co., Ltd., product name "#78 (ISAF)" *4 Silica: Produced by Tosoh Silica Corporation, product name "Nipsil AQ" *5 Oil: Produced by Japan Energy Corporation, product name "Process X-140" *6 Vulcanization accelerator: 1,3-Diphenylguanidine (produced by Sumitomo Chemical Co., Ltd., product name "SOXINOL® D-G" (SOXINOL is a registered trademark in Japan, other countries, or both)), dibenzothiazolyl disulfide (produced by Ouchi Shinko Chemical Industrial Co., Ltd., product name "NOCCELER® DM-P" (NOCCELER is a registered trademark in Japan, other countries, or both)), and N-cyclohexyl-2-benzothiazolylsulfenamide (produced by Ouchi Shinko Chemical Industrial Co., Ltd., product name "NOCCELER® CZ-G") compounded in a 3:5:5 ratio *7 TPA: Polyamide-based thermoplastic elastomer, produced by Ube Industries, Ltd., product name "UBESTA XPA9055X1"

It can be seen from Tables 1 and 2 that in the case of the tires in the examples in which tread rubber having a tan $\delta_{60°C}$ and E'$_{30°C}$ that satisfied the relationship in formula (1) was used in addition to the tire frame being formed from a resin composition (resin material 100 mass%) and a resin composition (resin material 100 mass%) being used in the coating layer coating the reinforcement member in the reinforcement layer, high-speed durability was better than for tires in Comparative Examples 4-6 in which E'$_{30°C}$ was less than $27.5 \times$ tan $\delta_{60°C}$ + 1.125, and durability under heavy loads was better than for tires in Comparative Examples 1-3 in which E'$_{30°C}$ was greater than $27.5 \times$ tan $\delta_{60°C}$ + 11.25.

(Comparative Example 7 and Examples 19-21)

In each of Comparative Example 7 and Examples 19-21, a tire was produced in the same way as in Example 1 with the exception that when providing the reinforcement layer outward of the tire frame in the tire radial direction, steel cord coated with a resin composition of a formulation shown in Table 3 was used instead of the steel cord coated with the polyamide-based thermoplastic elastomer.

The previously described methods were used in order to measure the organic acid content in the rubber composition used in the tread rubber, the loss tangent (tan $\delta_{60°C}$) of the tread rubber during 1% strain at 60°C, the storage modulus (E'$_{30°C}$) of the tread rubber during 1% strain at 30°C, and the ratio (E'$_{0.1\%}$/E'$_{3.0\%}$) of the storage modulus (E'$_{0.1\%}$) of the tread rubber during 0.1% strain at 25°C and the storage modulus (E'$_{3.0\%}$) of the tread rubber during 3.0% strain at 25°C.

The produced tire was evaluated by the previously described methods in order to evaluate high-speed drum durability, heavy-load drum durability, and handling on a dry road surface.

Note that the results in evaluations of high-speed drum durability and heavy-load drum durability were expressed as index values relative to the values in Example 2, which were each set as 100. The results are shown in Table 3.

Table 3

| | | | Comparative Example 7 | Example 19 | Example 20 | Example 21 |
|---|---|---|---|---|---|---|
| Tire frame material | | | TPA *7 | TPA *7 | TPA *7 | TPA *7 |
| Formulation of resin composition for coating layer ot reinforcement layer | TPA *7 | Mass% | 45 | 55 | 70 | 70 |
| | Rubber *8 | | 55 | 45 | 30 | 0 |
| | TPO *9 | | 0 | 0 | 0 | 30 |
| Tread rubber formulation | NR *1 | Parts by mass | 20 | 20 | 20 | 20 |
| | SBR *2 | | 80 | 80 | 80 | 80 |
| | Carbon black *3 | | 10 | 10 | 10 | 10 |
| | Silica *4 | | 50 | 50 | 50 | 50 |
| | Oil *5 | | 22 | 22 | 22 | 22 |
| | Zinc oxide | | 2.5 | 2.5 | 2.5 | 2.5 |
| | Sulfur | | 1.7 | 1.7 | 1.7 | 1.7 |
| | Stearic acid | | 1.0 | 1.0 | 1.0 | 1.0 |
| | Vulcanization accelerator *6 | | 3.45 | 3.45 | 3.45 | 3.45 |
| Organic acid content in rubber composition for tread rubber | | Mass% | 1.39 | 1.39 | 1.39 | 1.39 |

(continued)

|  |  |  | Comparative Example 7 | Example 19 | Example 20 | Example 21 |
|---|---|---|---|---|---|---|
| Tread rubber physical properties | $\tan \delta_{60°C}$ | - | 0.17 | 0.17 | 0.17 | 0.17 |
|  | $E'_{30°C}$ | MPa | 9.7 | 9.7 | 9.7 | 9.7 |
|  | $27.5 \times \tan \delta_{60°C} + 1.125$ | - | 5.8 | 5.8 | 5.8 | 5.8 |
|  | $27.5 \times \tan \delta_{60°C} + 11.25$ | - | 15.9 | 15.9 | 15.9 | 15.9 |
|  | $E'_{0.1\%}/E'_{3.0\%}$ | - | 1.6 | 1.6 | 1.6 | 1.6 |
| Tire performance | High- speed drum durability | Index value | 90 | 101 | 102 | 101 |
|  | Heavy-load drum durability | Index value | 95 | 100 | 101 | 102 |
|  | Handling on dry road surface | - | A | A | A | A |

*1 to *7: Same as in Tables 1 and 2
*8: Rubber composition formed compounding 0.525 parts by mass of normal sulfur (produced by Tsurumi Chemical Industry Co., Ltd., normal sulfur, 5% oil treated), 2 parts by mass of N,N'-diphenylmethanebismaleimide, 1.5 parts by mass of a vulcanization accelerator CZ ("NOCCELER CZ" produced by Ouchi Shinko Chemical Industrial Co., Ltd., N-cyclohexyl-2-benzothiazylsulfenamide), 1 part by mass of a vulcanization accelerator TS ("NOCCELER TS" produced by Ouchi Shinko Chemical Industrial Co., Ltd., tetramethylthiuram monosulfide), 2 parts by mass of stearic acid, and 5 parts by mass of zinc oxide relative to 100 parts by mass of acrylonitrile-butadiene copolymer rubber (NBR)
*9 TPO: $\alpha$-Polyolefin-based thermoplastic elastomer, produced by Mitsui Chemicals, Inc., product name "TAFMER MH7010"

It can be seen from Comparative Example 7 and Examples 19 and 20 in Table 3 that when tread rubber having a $\tan \delta_{60°C}$ and $E'_{30°C}$ that satisfy the relationship in formula (1) is used, high-speed durability and durability under heavy loads are improved through use of a resin composition containing at least 50 mass% of a resin material in the coating layer of the reinforcement member in the reinforcement layer.

Moreover, Example 21 demonstrates that high-speed durability and durability under heavy loads are improved even when a resin composition containing two or more types of resin materials is used.

(Comparative Examples 8 and 9)

In Comparative Examples 8 and 9, tires were produced in the same way as in Example 1 and Comparative Example 3 with the exception that when providing the reinforcement layer outward of the tire frame in the tire radial direction, steel cord coated with a rubber was used instead of the steel cord coated with the polyamide-based thermoplastic elastomer.

A rubber composition used in the coating layer of the steel cord was formed by compounding 60 parts by mass of carbon black (HAF grade carbon black, produced by Asahi Carbon Co., Ltd., product name "Asahi #70"), 7.5 parts by mass of zinc oxide, 1.0 parts by mass of a cobalt fatty acid salt (produced by Rhodia, product name "Manobond C 22.5"), 1.5 parts by mass of an antioxidant 6C (N-1,3-dimethylbutyl-N'-phenyl-p-phenylenediamine, produced by Ouchi Shinko Chemical Industrial Co., Ltd., product name "NOCCELER 6C"), 6.0 parts by mass of sulfur, and 1.0 parts by mass of a vulcanization accelerator DZ (N,N'-dicyclohexyl-2-benzothiazolylsulfenamide, produced by Ouchi Shinko Chemical Industrial Co., Ltd., product name "NOCCELER DZ") relative to 100 parts by mass of natural rubber (RSS).

The previously described methods were used in order to measure the organic acid content in the rubber composition used in the tread rubber, the loss tangent ($\tan \delta_{60°C}$) of the tread rubber during 1% strain at 60°C, the storage modulus ($E'_{30°C}$) of the tread rubber during 1% strain at 30°C, and the ratio ($E'_{0.1\%}/E'_{3.0\%}$) of the storage modulus

($E'_{0.1\%}$) of the tread rubber during 0.1% strain at 25°C and the storage modulus ($E'_{3.0\%}$) of the tread rubber during 3.0% strain at 25°C.

The produced tire was evaluated by the previously described methods in order to evaluate high-speed drum durability, heavy-load drum durability, and handling on a dry road surface.

Note that results in evaluations of high-speed drum durability and heavy-load drum durability were expressed as index values relative to the value in Comparative Example 8, which was set as 100. The results are shown in Table 4.

Table 4

| | | | Comparative Example 8 | Comparative Example 9 |
|---|---|---|---|---|
| Tire frame material | | | TPA *7 | TPA *7 |
| Material of coating layer of reinforcement layer | | | Rubber *10 | Rubber *10 |
| Tread rubber formulation | NR *1 | Parts by mass | 20 | 20 |
| | SBR *2 | | 80 | 80 |
| | Carbon black *3 | | 10 | 80 |
| | Silica *4 | | 50 | 0 |
| | Oil *5 | | 22 | 5 |
| | Zinc oxide | | 2.5 | 2.5 |
| | Sulfur | | 1.7 | 1.7 |
| | Stearic acid | | 1.0 | 1.0 |
| | Vulcanization accelerator *6 | | 3.45 | 3.45 |
| Organic acid content in rubber composition for tread rubber | | Mass% | 1.39 | 1.39 |
| Tread rubber physical properties | $\tan \delta_{60°C}$ | - | 0.17 | 0.23 |
| | $E'_{30°C}$ | MPa | 9.7 | 19.0 |
| | $27.5 \times \tan \delta_{60°C} + 1.125$ | - | 5.8 | 7.5 |
| | $27.5 \times \tan \delta_{60°C} + 11.25$ | - | 15.9 | 17.6 |
| | $E'_{0.1\%}/E'_{3.0\%}$ | - | 1.6 | 3.3 |
| Tire performance | High-speed drum durability | Index value | 100 | 100 |
| | Heavy-load drum durability | Index value | 100 | 100 |
| | Handling on dry road surface | - | B | B |
| *1 to *7: Same as in Tables 1 and 2 *10: Indicates that the aforementioned rubber composition was used in the coating layer of the steel cord | | | | |

It can be seen from Table 4 that in a situation in which a rubber composition is used in the coating layer for the reinforcement member of the reinforcement layer, high-speed durability of the tire and durability of the tire under heavy loads are not improved even through use of tread rubber having a $\tan \delta_{60°C}$ and $E'_{30°C}$ that satisfy the relationship in formula (1).

(Example 22 and Comparative Examples 10 and 11)

In Example 22 and Comparative Examples 10 and 11, tires were produced in the same way as in Example 1 and Comparative Examples 1 and 2 with the exception that a polyester-based thermoplastic elastomer was used instead of the polyamide-based thermoplastic elastomer in the tire frame and the coating layer of the steel cord in each of the tires.

The previously described methods were used in order to measure the organic acid content in the rubber composition used in the tread rubber, the loss tangent (tan $\delta_{60°C}$) of the tread rubber during 1% strain at 60°C, the storage modulus (E'$_{30°C}$) of the tread rubber during 1% strain at 30°C, and the ratio (E'$_{0.1\%}$/E'$_{3.0\%}$) of the storage modulus (E'$_{0.1\%}$) of the tread rubber during 0.1% strain at 25°C and the storage modulus (E'$_{3.0\%}$) of the tread rubber during 3.0% strain at 25°C.

The produced tire was evaluated by the previously described methods in order to evaluate high-speed drum durability, heavy-load drum durability, and handling on a dry road surface.

Note that results in evaluations of high-speed drum durability and heavy-load drum durability were expressed index values relative to the value in Example 22, which was set as 100. The results are shown in Table 5.

Table 5

| | | | Example 22 | Comparative Example 10 | Comparative Example 11 |
|---|---|---|---|---|---|
| Tire frame material | | | TPC *11 | TPC *11 | TPC *11 |
| Material of coating layer of reinforcement layer | | | TPC *11 | TPC *11 | TPC *11 |
| Tread rubber formulation | NR *1 | Parts by mass | 20 | 20 | 20 |
| | SBR *2 | | 80 | 80 | 80 |
| | Carbon black *3 | | 10 | 10 | 20 |
| | Silica *4 | | 50 | 50 | 55 |
| | Oil *5 | | 22 | 5 | 5 |
| | Zinc oxide | | 2.5 | 2.5 | 2.5 |
| | Sulfur | | 1.7 | 1.7 | 1.7 |
| | Stearic acid | | 1.0 | 1.0 | 1.0 |
| | Vulcanization accelerator *6 | | 3.45 | 3.45 | 3.45 |
| Organic acid content in rubber composition for tread rubber | | Mass% | 1.39 | 1.39 | 1.39 |
| Tread rubber physical properties | tan $\delta_{60°C}$ | - | 0.17 | 0.15 | 0.20 |
| | E'$_{30°C}$ | MPa | 9.7 | 16.0 | 17.5 |
| | $27.5 \times$ tan $\delta_{60°C}$ + 1.125 | - | 5.8 | 5.3 | 6.6 |
| | $27.5 \times$ tan $\delta_{60°C}$ + 11.25 | - | 15.9 | 15.4 | 16.8 |
| | E'$_{0.1\%}$/E'$_{3.0\%}$ | - | 1.6 | 1.3 | 2.5 |
| Tire performance | High-speed drum durability | Index value | 100 | 97 | 95 |
| | Heavy-load drum durability | Index value | 100 | 93 | 90 |
| | Handling on dry road surface | - | A | A | A |

*1 to *6: Same as in Tables 1 and 2
*11 TPC: Polyester-based thermoplastic elastomer, produced by Du Pont-Toray Co., Ltd., product name "Hytrel 5557"

It can be seen from Table 5 that in a situation in which a polyester-based thermoplastic elastomer is used in the tire frame and the coating layer of the steel cord in the tire, high-speed durability of the tire and durability of the tire under heavy loads are improved through use of tread rubber having a tan $\delta_{60°C}$ and $E'_{30°C}$ that satisfy the relationship in formula (1).

(Example 23 and Comparative Examples 12 and 13)

In Example 23 and Comparative Examples 12 and 13, tires were produced in the same way as in Example 1 and Comparative Examples 1 and 2 with the exception that a polyurethane-based thermoplastic elastomer was used instead of the polyamide-based thermoplastic elastomer in the tire frame and the coating layer of the steel cord in each of the tires.

The previously described methods were used in order to measure the organic acid content in the rubber composition used in the tread rubber, the loss tangent (tan $\delta_{60°C}$) of the tread rubber during 1% strain at 60°C, the storage modulus ($E'_{30°C}$) of the tread rubber during 1% strain at 30°C, and the ratio ($E'_{0.1\%}/E'_{3.0\%}$) of the storage modulus ($E'_{0.1\%}$) of the tread rubber during 0.1% strain at 25°C and the storage modulus ($E'_{3.0\%}$) of the tread rubber during 3.0% strain at 25°C.

The produced tire was evaluated by the previously described methods in order to evaluate high-speed drum durability, heavy-load drum durability, and handling on a dry road surface.

Note that results in evaluations of high-speed drum durability and heavy-load drum durability were expressed as index values relative to the value in Example 23, which was set as 100. The results are shown in Table 6.

Table 6

| | | | Example 23 | Comparative Example 12 | Comparative Example 13 |
|---|---|---|---|---|---|
| Tire frame material | | | TPU *12 | TPU *12 | TPU *12 |
| Material of coating layer of reinforcement layer | | | TPU *12 | TPU *12 | TPU *12 |
| Tread rubber formulation | NR *1 | Parts by mass | 20 | 20 | 20 |
| | SBR *2 | | 80 | 80 | 80 |
| | Carbon black *3 | | 10 | 10 | 20 |
| | Silica *4 | | 50 | 50 | 55 |
| | Oil *5 | | 22 | 5 | 5 |
| | Zinc oxide | | 2.5 | 2.5 | 2.5 |
| | Sulfur | | 1.7 | 1.7 | 1.7 |
| | Stearic acid | | 1.0 | 1.0 | 1.0 |
| | Vulcanization accelerator *6 | | 3.45 | 3.45 | 3.45 |
| Organic acid content in rubber composition for tread rubber | | Mass% | 1.39 | 1.39 | 1.39 |
| Tread rubber physical properties | tan $\delta_{60°C}$ | - | 0.17 | 0.15 | 0.20 |
| | $E'_{30°C}$ | MPa | 9.7 | 16.0 | 17.5 |
| | 27.5 × tan $\delta_{60°C}$ + 1.125 | - | 5.8 | 5.3 | 6.6 |
| | 27.5 × tan $\delta_{60°C}$ + 11.25 | - | 15.9 | 15.4 | 16.8 |
| | $E'_{0.1\%}/E'_{3.0\%}$ | - | 1.6 | 1.3 | 2.5 |

(continued)

| | | | Example 23 | Comparative Example 12 | Comparative Example 13 |
|---|---|---|---|---|---|
| Tire performance | High-speed drum durability | Index value | 100 | 95 | 94 |
| | Heavy-load drum durability | Index value | 100 | 100 | 100 |
| | Handling on dry road surface | - | A | A | A |
| *1 to *6: Same as in Tables 1 and 2 | | | | | |
| *12 TPU: Polyurethane-based thermoplastic elastomer, produced by Dainichiseika Color & Chemicals Mfg. Co., Ltd., product name "P2564" | | | | | |

It can be seen from Table 6 that in a situation in which a polyurethane-based thermoplastic elastomer is used in the tire frame and the coating layer of the steel cord in the tire, high-speed durability of the tire is improved through use of tread rubber having a tan $\delta_{60°C}$ and E'$_{30°C}$ that satisfy the relationship in formula (1).

(Examples 24-41 and Comparative Examples 14-19)

In each of Examples 24-41 and Comparative Examples 14-19, a tire was produced by producing a tire frame (tire case) formed mainly from a rubber according to a standard method, providing a reinforcement layer outward of the tire frame in a tire radial direction by spirally winding, in a tire circumferential direction, steel cord that had been coated with a polyamide-based thermoplastic elastomer, and further providing tread rubber formed from a rubber composition of a formulation shown in Tables 7 and 8 outward of the reinforcement layer in the tire radial direction.

Note that the coating layer of the steel cord in the produced tire was formed from a polyamide-based thermoplastic elastomer and the percentage of resin material therein was 100 mass%.

The previously described methods were used in order to measure the organic acid content in the rubber composition used in the tread rubber, the loss tangent (tan $\delta_{60°C}$) of the tread rubber during 1% strain at 60°C, the storage modulus (E'$_{30°C}$) of the tread rubber during 1% strain at 30°C, and the ratio (E'$_{0.1\%}$/E'$_{3.0\%}$) of the storage modulus (E'$_{0.1\%}$) of the tread rubber during 0.1% strain at 25°C and the storage modulus (E'$_{3.0\%}$) of the tread rubber during 3.0% strain at 25°C.

The produced tire was evaluated by the previously described methods in order to evaluate high-speed drum durability, heavy-load drum durability, and handling on a dry road surface.

Note that results in evaluations of high-speed drum durability and heavy-load drum durability were expressed as index values relative to the value in Example 25, which was set as 100. The results are shown in Tables 7 and 8.

Table 7

| | | Unit | Example 24 | Comparative Example 14 | Comparative Example 15 | Comparative Example 16 | Example 25 | Example 26 | Comparative Example 17 | Comparative Example 18 | Comparative Example 19 | Example 27 | Example 28 | Example 29 |
|---|---|---|---|---|---|---|---|---|---|---|---|---|---|---|
| Tire frame material | Material of coating layer of reinforcement layer | | Rubber *13 | Rubber *13 | Rubber *13 | Rubber *13 | Rubber *13 | Rubber *13 | Rubber *13 | Rubber *13 | Rubber *13 | Rubber *13 | Rubber *13 | Rubber *13 |
| | | | TPA *7 | TPA *7 | TPA *7 | TPA *7 | TPA *7 | TPA *7 | TPA *7 | TPA *7 | TPA *7 | TPA *7 | TPA *7 | TPA *7 |
| Tread rubber formulation | NR *1 | | 20 | 20 | 20 | 20 | 20 | 20 | 20 | 20 | 20 | 20 | 20 | 20 |
| | SBR *2 | | 80 | 80 | 80 | 80 | 80 | 80 | 80 | 80 | 80 | 80 | 80 | 80 |
| | Carbon black *3 | | 10 | 10 | 20 | 80 | 20 | 80 | 10 | 20 | 80 | 20 | 80 | 100 |
| | Silica *4 | | 50 | 50 | 55 | 0 | 55 | 0 | 50 | 55 | 0 | 55 | 0 | 0 |
| | Oil *5 | Parts by mass | 22 | 5 | 5 | 5 | 15 | 15 | 25 | 25 | 25 | 20 | 20 | 25 |
| | Zinc oxide | | 2.5 | 2.5 | 2.5 | 2.5 | 2.5 | 2.5 | 2.5 | 2.5 | 2.5 | 2.5 | 2.5 | 2.5 |
| | Sulfur | | 1.7 | 1.7 | 1.7 | 1.7 | 1.7 | 1.7 | 1.4 | 1.4 | 1.4 | 1.8 | 1.8 | 1.8 |
| | Stearic acid | | 1.0 | 1.0 | 1.0 | 1.0 | 1.0 | 1.0 | 1.0 | 1.0 | 1.0 | 1.0 | 1.0 | 1.0 |
| | Vulcanization accelerator *6 | | 3.45 | 3.45 | 3.45 | 3.45 | 3.45 | 3.45 | 3.45 | 3.45 | 3.45 | 3.45 | 3.45 | 3.45 |
| Organic acid content in rubber composition for tread rubber | | Mass% | 1.39 | 1.39 | 1.39 | 1.39 | 1.39 | 1.39 | 1.39 | 1.39 | 1.39 | 1.39 | 1.39 | 1.39 |
| Tread rubber physical properties | $\tan \delta_{60°C}$ | - | 0.17 | 0.15 | 0.20 | 0.23 | 0.20 | 0.24 | 0.18 | 0.21 | 0.24 | 0.20 | 0.22 | 0.26 |
| | $E'_{30°C}$ | MPa | 9.7 | 16.0 | 17.5 | 19.0 | 15.5 | 16.0 | 6.0 | 6.5 | 7.0 | 7.5 | 7.5 | 9.0 |
| | $27.5 \times \tan \delta_{60°C} + 1.125$ | - | 5.8 | 5.3 | 6.6 | 7.5 | 6.6 | 7.7 | 6.1 | 6.9 | 7.7 | 6.6 | 7.2 | 8.3 |
| | $27.5 \times \tan \delta_{60°C} + 11.25$ | - | 15.9 | 15.4 | 16.8 | 17.6 | 16.8 | 17.9 | 16.2 | 17.0 | 17.9 | 16.8 | 17.3 | 18.4 |
| | $E'_{0.1\%}/E'_{3.0\%}$ | - | 1.6 | 1.3 | 2.5 | 3.3 | 1.5 | 2.7 | 1.6 | 2.6 | 3.3 | 2.5 | 3.2 | 3.2 |

| | | | Example 24 | Compara-tive Exam-ple 14 | Compara-tive Exam-ple 15 | Compara-tive Exam-ple 16 | Example 25 | Example 26 | Compara-tive Exam-ple 17 | Compara-tive Exam-ple 18 | Compara-tive Exam-ple 19 | Example 27 | Example 28 | Example 29 |
|---|---|---|---|---|---|---|---|---|---|---|---|---|---|---|
| Tire per-formance | High-speed drum dura-bility | Index value | 104 | 105 | 103 | 102 | 100 | 101 | 99 | 99 | 98 | 103 | 102 | 100 |
| | Heavy-load drum durability | Index value | 107 | 99 | 98 | 97 | 100 | 102 | 106 | 105 | 103 | 104 | 104 | 103 |
| | Handling on dry road surface | - | B | B | B | B | B | B | B | B | B | B | B | B |

Table 8

| | | Example 30 | Example 31 | Example 32 | Example 33 | Example 34 | Example 35 | Example 36 | Example 37 | Example 38 | Example 39 | Example 40 | Example 41 |
|---|---|---|---|---|---|---|---|---|---|---|---|---|---|
| Tire frame material | | Rubber *13 | Rubber *13 | Rubber *13 | Rubber *13 | Rubber *13 | Rubber *13 | Rubber *13 | Rubber *13 | Rubber *13 | Rubber *13 | Rubber *13 | Rubber *13 |
| Material of coating layer of reinforcement layer | | TPA *7 | TPA *7 | TPA *7 | TPA *7 | TPA *7 | TPA *7 | TPA *7 | TPA *7 | TPA *7 | TPA *7 | TPA *7 | TPA *7 |
| Tread rubber formulation | NR *1 | 0 | 0 | 20 | 20 | 20 | 20 | 20 | 20 | 20 | 20 | 20 | 20 |
| | SBR *2 | 100 | 100 | 80 | 80 | 80 | 80 | 80 | 80 | 80 | 80 | 80 | 80 |
| | Carbon black *3 | 80 | 80 | 10 | 10 | 10 | 10 | 10 | 10 | 10 | 10 | 10 | 10 |
| | Silica *4 — Parts by mass | 0 | 0 | 50 | 50 | 50 | 50 | 50 | 50 | 50 | 50 | 50 | 50 |
| | Oil *5 | 25 | 25 | 22 | 22 | 22 | 22 | 22 | 22 | 22 | 22 | 22 | 22 |
| | Zinc oxide | 2.5 | 2.5 | 2.5 | 2.5 | 2.5 | 2.5 | 2.5 | 2.5 | 2.5 | 2.5 | 2.5 | 2.5 |
| | Sulfur | 1.5 | 1.5 | 1.7 | 1.7 | 1.7 | 1.7 | 1.7 | 1.7 | 1.7 | 1.7 | 1.7 | 1.7 |
| | Stearic acid | 1.0 | 1.0 | 1.0 | 1.0 | 1.7 | 1.0 | 1.0 | 1.0 | 1.0 | 1.0 | 1.0 | 1.0 |
| | Vulcanization accelerator *6 | 3.45 | 3.45 | 3.45 | 3.45 | 3.45 | 3.45 | 3.45 | 0.20 | 0.30 | 0.50 | 2.20 | 1.80 |
| Organic acid content in rubber composition for tread rubber | Mass% | 1.39 | 1.39 | 0.35 | 0.52 | 2.50 | 2.61 | 1.96 | 1.39 | 1.39 | 1.39 | 1.39 | 1.39 |
| Tread rubber physical properties | $\tan \delta_{60°C}$ (-) | 0.24 | 0.24 | 0.17 | 0.17 | 0.17 | 0.17 | 0.17 | 0.17 | 0.17 | 0.17 | 0.17 | 0.17 |
| | $E'_{30°C}$ (MPa) | 16.0 | 16.0 | 9.7 | 9.7 | 9.7 | 9.7 | 9.7 | 9.7 | 9.7 | 9.7 | 9.7 | 9.7 |
| | $27.5 \times \tan \delta_{60°C} + 1.125$ (-) | 7.7 | 7.7 | 5.8 | 5.8 | 5.8 | 5.8 | 5.8 | 5.8 | 5.8 | 5.8 | 5.8 | 5.8 |
| | $27.5 \times \tan \delta_{60°C} + 11.25$ (-) | 17.9 | 17.9 | 15.9 | 15.9 | 15.9 | 15.9 | 15.9 | 15.9 | 15.9 | 15.9 | 15.9 | 15.9 |
| | $E'_{0.1\%}/E'_{3.0\%}$ (-) | 5.8 | 6.3 | 1.6 | 1.6 | 1.6 | 1.6 | 1.6 | 1.6 | 1.6 | 1.6 | 1.6 | 1.6 |

| | | | Example 30 | Example 31 | Example 32 | Example 33 | Example 34 | Example 35 | Example 36 | Example 37 | Example 38 | Example 39 | Example 40 | Example 41 |
|---|---|---|---|---|---|---|---|---|---|---|---|---|---|---|
| Tire perform-ance | High-speed drum durability | Index value | 100 | 100 | 102 | 103 | 102 | 102 | 104 | 101 | 102 | 101 | 103 | 103 |
| | Heavy-load drum durability | Index value | 103 | 102 | 106 | 105 | 104 | 103 | 105 | 104 | 104 | 102 | 106 | 105 |
| | Handling on dry road surface | - | B | B | B | B | B | B | B | B | B | B | B | B |
| *1 to *7: Same as in Tables 1 and 2 <br> *13: Indicates that the tire frame was formed mainly from a rubber | | | | | | | | | | | | | | |

It can be seen from Tables 7 and 8 that even in a situation in which the tire frame is a normal tire frame formed mainly from a rubber, the tires in the examples in which a resin composition (resin material 100 mass%) was used in the coating layer of the reinforcement member in the reinforcement layer had better high-speed durability than the tires in Comparative Examples 17-19 for which $E'_{30°C}$ was less than $27.5 \times \tan \delta_{60°C} + 1.125$, and had better durability under heavy loads than the tires in Comparative Examples 14-16 for which $E'_{30°C}$ was greater than $27.5 \times \tan \delta_{60°C} + 11.25$.

(Comparative Example 20 and Examples 42-44)

In each of Comparative Example 20 and Examples 42-44, a tire was produced in the same way as in Example 24 with the exception that when providing the reinforcement layer outward of the tire frame in the tire radial direction, steel cord coated with a resin composition of a formulation shown in Table 9 was used instead of the steel cord coated with the polyamide-based thermoplastic elastomer.

The previously described methods were used in order to measure the organic acid content in the rubber composition used in the tread rubber, the loss tangent ($\tan \delta_{60°C}$) of the tread rubber during 1% strain at 60°C, the storage modulus ($E'_{30°C}$) of the tread rubber during 1% strain at 30°C, and the ratio ($E'_{0.1\%}/E'_{3.0\%}$) of the storage modulus ($E'_{0.1\%}$) of the tread rubber during 0.1% strain at 25°C and the storage modulus ($E'_{3.0\%}$) of the tread rubber during 3.0% strain at 25°C.

The produced tire was evaluated by the previously described methods in order to evaluate high-speed drum durability, heavy-load drum durability, and handling on a dry road surface.

Note that results in evaluations of high-speed drum durability and heavy-load drum durability were expressed as index values relative to the value in Example 25, which was set as 100. The results are shown in Table 9.

Table 9

| | | | Comparative Example 20 | Example 42 | Example 43 | Example 44 |
|---|---|---|---|---|---|---|
| Tire frame material | | | Rubber *13 | Rubber *13 | Rubber *13 | Rubber *13 |
| Formulation of resin composition for coating layer of reinforcement layer | TPA *7 | Mass% | 45 | 55 | 70 | 70 |
| | Rubber *8 | | 55 | 45 | 30 | 0 |
| | TPO *9 | | 0 | 0 | 0 | 30 |
| Tread rubber formulation | NR *1 | Parts by mass | 20 | 20 | 20 | 20 |
| | SBR *2 | | 80 | 80 | 80 | 80 |
| | Carbon black *3 | | 10 | 10 | 10 | 10 |
| | Silica *4 | | 50 | 50 | 50 | 50 |
| | Oil *5 | | 22 | 22 | 22 | 22 |
| | Zinc oxide | | 2.5 | 2.5 | 2.5 | 2.5 |
| | Sulfur | | 1.7 | 1.7 | 1.7 | 1.7 |
| | Stearic acid | | 1.0 | 1.0 | 1.0 | 1.0 |
| | Vulcanization accelerator *6 | | 3.45 | 3.45 | 3.45 | 3.45 |
| Organic acid content in rubber composition for tread rubber | | Mass% | 1.39 | 1.39 | 1.39 | 1.39 |

(continued)

| | | | Comparative Example 20 | Example 42 | Example 43 | Example 44 |
|---|---|---|---|---|---|---|
| Tread rubber physical properties | tan $\delta_{60°C}$ | - | 0.17 | 0.17 | 0.17 | 0.17 |
| | E'$_{30°C}$ | MPa | 9.7 | 9.7 | 9.7 | 9.7 |
| | $27.5 \times$ tan $\delta_{60°C}$ + 1.125 | - | 5.8 | 5.8 | 5.8 | 5.8 |
| | $27.5 \times$ tan $\delta_{60°C}$ + 11.25 | - | 15.9 | 15.9 | 15.9 | 15.9 |
| | E'$_{0.1\%}$/E'$_{3.0\%}$ | - | 1.6 | 1.6 | 1.6 | 1.6 |
| Tire performance | High-speed drum durability | Index value | 95 | 101 | 102 | 102 |
| | Heavy-load drum durability | Index value | 97 | 100 | 102 | 101 |
| | Handling on dry road surface | - | B | B | B | B |
| *1 to *7: Same as in Tables 1 and 2 \*8 and *9: Same as in Table 3 \*13: Indicates that the tire frame was formed mainly from a rubber | | | | | | |

It can be seen from Comparative Example 20 and Examples 42-44 in Table 9 that even in a situation in which the tire frame is a normal tire frame formed mainly from a rubber, when tread rubber having a tan $\delta_{60°C}$ and E'$_{30°C}$ that satisfy the relationship in formula (1) is used, high-speed durability and durability under heavy loads are improved through use of a resin composition containing at least 50 mass% of a resin material in the coating layer of the reinforcement member in the reinforcement layer.

Moreover, Example 44 demonstrates that in a situation in which the tire frame is a normal tire frame formed mainly from a rubber, high-speed durability and durability under heavy loads is improved even when a resin composition containing two or more types of resin materials is used.

(Comparative Examples 21 and 22)

In Comparative Examples 21 and 22, tires were produced in the same way as in Example 24 and Comparative Example 16 with the exception that when providing the reinforcement layer outward of the tire frame in the tire radial direction, steel cord coated with a rubber was used instead of the steel cord coated with the polyamide-based thermoplastic elastomer.

A rubber composition used in the coating layer of the steel cord had the same formulation as the rubber composition used in the coating layer of the steel cord in the tires of Comparative Examples 8 and 9.

The previously described methods were used in order to measure the organic acid content in the rubber composition used in the tread rubber, the loss tangent (tan $\delta_{60°C}$) of the tread rubber during 1% strain at 60°C, the storage modulus (E'$_{30°C}$) of the tread rubber during 1% strain at 30°C, and the ratio (E'$_{0.1\%}$/E'$_{3.0\%}$) of the storage modulus (E'$_{0.1\%}$) of the tread rubber during 0.1% strain at 25°C and the storage modulus (E'$_{3.0\%}$) of the tread rubber during 3.0% strain at 25°C.

The produced tire was evaluated by the previously described methods in order to evaluate high-speed drum durability, heavy-load drum durability, and handling on a dry road surface.

Note that results in evaluations of high-speed drum durability and heavy-load drum durability were expressed as index values relative to the value in Comparative Example 21, which was set as 100. The results are shown in Table 10.

Table 10

| | | | Comparative Example 21 | Comparative Example 22 |
|---|---|---|---|---|
| Tire frame material | | | Rubber * 13 | Rubber * 13 |
| Material of coating layer of reinforcement layer | | | Rubber * 10 | Rubber * 10 |
| Tread rubber formulation | NR *1 | Parts by mass | 20 | 20 |
| | SBR *2 | | 80 | 80 |
| | Carbon black *3 | | 10 | 80 |
| | Silica *4 | | 50 | 0 |
| | Oil *5 | | 22 | 5 |
| | Zinc oxide | | 2.5 | 2.5 |
| | Sulfur | | 1.7 | 1.7 |
| | Stearic acid | | 1.0 | 1.0 |
| | Vulcanization accelerator *6 | | 3.45 | 3.45 |
| Organic acid content in rubber composition for tread rubber | | Mass% | 1.39 | 1.39 |
| Tread rubber physical properties | $\tan \delta_{60°C}$ | - | 0.17 | 0.23 |
| | $E'_{30°C}$ | MPa | 9.7 | 19.0 |
| | $27.5 \times \tan \delta_{60°C} + 1.125$ | - | 5.8 | 7.5 |
| | $27.5 \times \tan \delta_{60°C} + 11.25$ | - | 15.9 | 17.6 |
| | $E'_{0.1\%}/E'_{3.0\%}$ | - | 1.6 | 3.3 |
| Tire performance | High-speed drum durability | Index value | 100 | 100 |
| | Heavy-load drum durability | Index value | 100 | 100 |
| | Handling on dry road surface | - | C | C |

*1 to *6: Same as in Tables 1 and 2
*10: Same as in Table 4
*13: Indicates that the tire frame was formed mainly from a rubber

It can be seen from Table 10 that in the case of a normal tire in which the tire frame is a normal tire frame formed mainly from a rubber and in which a rubber composition is used in the coating layer of the reinforcement member in the reinforcement layer, high-speed durability of the tire and durability of the tire under heavy loads are not improved even through use of tread rubber having a $\tan \delta_{60°C}$ and $E'_{30°C}$ that satisfy the relationship in formula (1).

(Example 45 and Comparative Examples 23 and 24)

In Example 45 and Comparative Examples 23 and 24, tires were produced in the same way as in Example 24 and Comparative Examples 14 and 15 with the exception that a polyester-based thermoplastic elastomer was used instead of the polyamide-based thermoplastic elastomer in the coating layer of the steel cord in each of the tires.
The previously described methods were used in order to measure the organic acid content in the rubber composition used in the tread rubber, the loss tangent ($\tan \delta_{60°C}$) of the tread rubber during 1% strain at 60°C, the storage modulus ($E'_{30°C}$) of the tread rubber during 1% strain at 30°C, and the ratio ($E'_{0.1\%}/E'_{3.0\%}$) of the storage modulus ($E'_{0.1\%}$) of the tread rubber during 0.1% strain at 25°C and the storage modulus ($E'_{3.0\%}$) of the tread rubber during 3.0% strain at 25°C.

The produced tire was evaluated by the previously described methods in order to evaluate high-speed drum durability, heavy-load drum durability, and handling on a dry road surface.

Note that result in evaluations of high-speed drum durability and heavy-load drum durability are expressed as index values relative to the value in Example 45, which was set as 100. The results are shown in Table 11.

Table 11

| | | | Example 45 | Comparative Example 23 | Comparative Example 24 |
|---|---|---|---|---|---|
| Tire frame material | | | Rubber * 13 | Rubber * 13 | Rubber * 13 |
| Material of coating layer of reinforcement layer | | | TPC *11 | TPC *11 | TPC *11 |
| Tread rubber formulation | NR *1 | Parts b) mass | 20 | 20 | 20 |
| | SBR *2 | | 80 | 80 | 80 |
| | Carbon black *3 | | 10 | 10 | 20 |
| | Silica *4 | | 50 | 50 | 55 |
| | Oil *5 | | 22 | 5 | 5 |
| | Zinc oxide | | 2.5 | 2.5 | 2.5 |
| | Sulfur | | 1.7 | 1.7 | 1.7 |
| | Stearic acid | | 1.0 | 1.0 | 1.0 |
| | Vulcanization accelerator *6 | | 3.45 | 3.45 | 3.45 |
| Organic acid content in rubber composition for tread rubber | | Mass% | 1.39 | 1.39 | 1.39 |
| Tread rubber physical properties | $\tan \delta_{60°C}$ | - | 0.17 | 0.15 | 0.20 |
| | $E'_{30°C}$ | MPa | 9.7 | 16.0 | 17.5 |
| | $27.5 \times \tan \delta_{60°C} + 1.125$ | - | 5.8 | 5.3 | 6.6 |
| | $27.5 \times \tan \delta_{60°C} + 11.25$ | - | 15.9 | 15.4 | 16.8 |
| | $E'_{0.1\%}/E'_{3.0\%}$ | - | 1.6 | 1.3 | 2.5 |
| Tire performance | High-speed drum durability | Index value | 100 | 99 | 97 |
| | Heavy-load drum durability | Index value | 100 | 93 | 92 |
| | Handling on dry road surface | - | B | B | B |
| *1 to *6: Same as in Tables 1 and 2 *11: Same as in Table 5 *13: Indicates that the tire frame was formed mainly from a rubber | | | | | |

It can be seen from Table 11 that in a situation in which the tire frame is a normal tire frame formed mainly from a rubber and in which a polyester-based thermoplastic elastomer is used in the coating layer of the steel cord of the tire, high-speed durability of the tire and durability of the tire under heavy loads are improved through use of tread rubber having a $\tan \delta_{60°C}$ and $E'_{30°C}$ that satisfy the relationship in formula (1).

(Example 46 and Comparative Examples 25 and 26)

In Example 46 and Comparative Examples 25 and 26, tires were produced in the same way as in Example 24 and Comparative Examples 14 and 15 with the exception that a polyurethane-based thermoplastic elastomer was used instead of the polyamide-based thermoplastic elastomer in the coating layer of the steel cord in each of the tires.

The previously described methods were used in order to measure the organic acid content in the rubber composition used in the tread rubber, the loss tangent (tan $\delta_{60°C}$) of the tread rubber during 1% strain at 60°C, the storage modulus (E'$_{30°C}$) of the tread rubber during 1% strain at 30°C, and the ratio (E'$_{0.1\%}$/E'$_{3.0\%}$) of the storage modulus (E'$_{0.1\%}$) of the tread rubber during 0.1% strain at 25°C and the storage modulus (E'$_{3.0\%}$) of the tread rubber during 3.0% strain at 25°C.

The produced tire was evaluated by the previously described methods in order to evaluate high-speed drum durability, heavy-load drum durability, and handling on a dry road surface.

Note that results in evaluations of high-speed drum durability and heavy-load drum durability were expressed as index values relative to the value in Example 46, which was set as 100. The results are shown in Table 12.

Table 12

| | | | Example 46 | Comparative Example 25 | Comparative Example 26 |
|---|---|---|---|---|---|
| Tire frame material | | | Rubber * 13 | Rubber * 13 | Rubber * 13 |
| Material of coating layer of reinforcement layer | | | TPU * 12 | TPU * 12 | TPU * 12 |
| Tread rubber formulation | NR *1 | Parts by mass | 20 | 20 | 20 |
| | SBR *2 | | 80 | 80 | 80 |
| | Carbon black *3 | | 10 | 10 | 20 |
| | Silica *4 | | 50 | 50 | 55 |
| | Oil *5 | | 22 | 5 | 5 |
| | Zinc oxide | | 2.5 | 2.5 | 2.5 |
| | Sulfur | | 1.7 | 1.7 | 1.7 |
| | Stearic acid | | 1.0 | 1.0 | 1.0 |
| | Vulcanization accelerator *6 | | 3.45 | 3.45 | 3.45 |
| Organic acid content in rubber composition for tread rubber | | Mass% | 1.39 | 1.39 | 1.39 |
| Tread rubber physical properties | tan $\delta_{60°C}$ | - | 0.17 | 0.15 | 0.20 |
| | E'$_{30°C}$ | MPa | 9.7 | 16.0 | 17.5 |
| | 27.5 × tan $\delta_{60°C}$ + 1.125 | - | 5.8 | 5.3 | 6.6 |
| | 27.5 × tan $\delta_{60°C}$ + 11.25 | - | 15.9 | 15.4 | 16.8 |
| | E'$_{0.1\%}$/E'$_{3.0\%}$ | - | 1.6 | 1.3 | 2.5 |

(continued)

|  |  |  | Example 46 | Comparative Example 25 | Comparative Example 26 |
|---|---|---|---|---|---|
| Tire performance | High-speed drum durability | Index value | 100 | 96 | 95 |
|  | Heavy-load drum durability | Index value | 100 | 98 | 95 |
|  | Handling on dry road surface | - | B | B | B |
| *1 to *6: Same as in Tables 1 and 2<br>*12: Same as in Table 6<br>*13: Indicates that the tire frame was formed mainly from a rubber | | | | | |

It can be seen from Table 12 that in a situation in which the tire frame is a normal tire frame formed mainly from a rubber and in which a polyurethane-based thermoplastic elastomer is used in the coating layer of the steel cord in the tire, high-speed durability of the tire is improved through use of tread rubber having a tan $\delta_{60°C}$ and E'$_{30°C}$ that satisfy the relationship in formula (1).

INDUSTRIAL APPLICABILITY

According to the present disclosure, it is possible to provide a tire that has excellent high-speed durability even though a resin material is used therein.

REFERENCE SIGNS LIST

10    Tire frame
11    Bead portion
12    Side portion
13    Crown portion
14    Bead core
20    Reinforcement layer
21    Reinforcement member
22    Coating layer
30    Tread rubber

**Claims**

1. A tire comprising:

    a tire frame (10) having an annular shape;
    a reinforcement layer (20) located outward of the tire frame (10) in a tire radial direction; and
    tread rubber (30) located outward of the reinforcement layer (20) in the tire radial direction, wherein
    the reinforcement layer (20) includes a reinforcement member (21) that is coated with a resin composition containing from 50 mass% to 100 mass% of a resin material,
    **characterized in that** the tread rubber (30) has a loss tangent (tan $\delta_{60°C}$) during 1% strain at 60°C under conditions of an initial load of 160 mg and a frequency of 52 Hz and a storage modulus (E'$_{30°C}$) during 1% strain at 30°C under conditions of an initial load of 160 mg and a frequency of 52 Hz that satisfy a relationship in formula (1) shown below:
    $27.5 \times \tan \delta_{60°C} + 1.125 \leq E'_{30°C} \leq 27.5 \times \tan \delta_{60°C} + 11.25$ (1) where, in formula (1), tan $\delta_{60°C}$ is the loss tangent during 1% strain at 60°C and E'$_{30°C}$ is the storage modulus (MPa) during 1% strain at 30°C.

2. The tire of claim 1, wherein

the loss tangent (tan $\delta_{60°C}$) of the tread rubber (30) during 1% strain at 60°C is no greater than 0.25.

3. The tire of claim 1 or 2, wherein
the tread rubber (30) has a storage modulus (E'$_{0.1\%}$) during 0.1% strain at 25°C under conditions of an initial load of 160 mg and a frequency of 52 Hz and a storage modulus (E'$_{3.0\%}$) during 3.0% strain at 25°C under conditions of an initial load of 160 mg and a frequency of 52 Hz that have a ratio (E'$_{0.1\%}$/E'$_{3.0\%}$) of no greater than 6.0.

4. The tire of any one of claims 1 to 3, wherein
a rubber composition having an organic acid content of from 0.5 mass% to 2.5 mass% is used in the tread rubber (30).

5. The tire of any one of claims 1 to 4, wherein
a rubber composition containing from 0.3 parts by mass to 5.0 parts by mass of a vulcanization accelerator relative to 100 parts by mass of a rubber component is used in the tread rubber (30).

6. The tire of any one of claims 1 to 5, wherein
the reinforcement layer (20) includes at least a reinforcement member (21) that is wound in a tire circumferential direction.

7. The tire of any one of claims 1 to 6, wherein
the tire frame (10) is formed from a resin composition containing from 50 mass% to 100 mass% of a resin material.

8. The tire of any one of claims 1 to 7, wherein
either or both of the reinforcement layer (20) and the tire frame (10) are formed using a resin composition that contains at least one of a thermoplastic resin and a thermoplastic elastomer.

9. The tire of claim 8, wherein
the at least one of the thermoplastic resin and the thermoplastic elastomer is polyamide based, polyester based, or polyurethane based.

**Patentansprüche**

1. Reifen, umfassend:

einen Reifenrahmen (10), der eine ringförmige Form aufweist;
eine Verstärkungsschicht (20), die in einer radialen Richtung des Reifens außen am Reifenrahmen (10) angeordnet ist; und
Lauffflächengummi (30), der in der radialen Richtung des Reifens außen an der Verstärkungsschicht (20) angeordnet ist, wobei
die Verstärkungsschicht (20) ein Verstärkungselement (21) einschließt, das mit einer Harzzusammensetzung beschichtet ist, die 50 bis 100 Massenprozent eines Harzwerkstoffs umfasst,
**dadurch gekennzeichnet, dass** der Laufflächengummi (30) einen Verlustfaktor (tan $\delta_{60\,°C}$) während einer Dehnung von 1 % bei 60 °C unter Bedingungen einer Ausgangslast von 160 mg und einer Frequenz von 52 Hz und einen Speichermodul (E'$_{30\,°C}$) während einer Dehnung von 1 % bei 30 °C unter Bedingungen einer Ausgangslast von 160 mg und einer Frequenz von 52 Hz aufweist, die eine Beziehung in der nachstehend dargestellten Formel (1) erfüllen:

$$27{,}5 \times \tan \delta_{60\,°C} + 1{,}125 \leq E'_{30\,°C} \leq 27{,}5 \times \tan \delta_{60\,°C} + 11{,}25 \ (1)$$

wobei in Formel (1) tan $\delta$60 °C der Verlustfaktor während einer Dehnung von 1 % bei 60 °C und E'$_{30°C}$ der Speichermodul (MPa) während einer Dehnung von 1 % bei 30 °C ist.

2. Reifen nach Anspruch 1, wobei
der Verlustfaktor (tan $\delta_{60°C}$) des Laufflächengummis (30) bei einer Dehnung von 1 % bei 60 °C nicht größer als 0,25 ist.

3. Reifen nach Anspruch 1 oder 2, wobei
der Laufflächengummi (30) einen Speichermodul (E'$_{0,1\,\%}$) während einer Dehnung von 0,1 % bei 25 °C unter Bedingungen einer Ausgangslast von 160 mg und einer Frequenz von 52 Hz und einen Speichermodul (E'$_{3,0\%}$) während einer Dehnung von 3,0 % bei 25 °C unter Bedingungen einer Ausgangslast von 160 mg und einer Frequenz von 52 Hz aufweist, die ein Verhältnis (E'$_{0,1\%}$/E'$_{3,0\%}$) von nicht mehr als 6,0 aufweisen.

**4.** Reifen nach einem der Ansprüche 1 bis 3, wobei
eine Gummizusammensetzung, die einen Gehalt an organischer Säure von 0,5 Massenprozent bis 2,5 Massenprozent aufweist, in dem Laufflächengummi (30) verwendet wird.

**5.** Reifen nach einem der Ansprüche 1 bis 4, wobei
eine Gummizusammensetzung, die 0,3 Massenteile bis 5,0 Massenteile eines Vulkanisationsbeschleunigers bezogen auf 100 Massenteile einer Gummikomponente umfasst, in dem Laufflächengummi (30) verwendet wird.

**6.** Reifen nach einem der Ansprüche 1 bis 5, wobei
die Verstärkungsschicht (20) mindestens ein Verstärkungselement (21) einschließt, das in einer Reifenumfangsrichtung gewickelt ist.

**7.** Reifen nach einem der Ansprüche 1 bis 6, wobei
der Reifenrahmen (10) aus einer Harzzusammensetzung ausgebildet ist, die 50 bis 100 Massenprozent eines Harzwerkstoffs enthält.

**8.** Reifen nach einem der Ansprüche 1 bis 7, wobei
eine oder beide der Verstärkungsschicht (20) und des Reifenrahmens (10) unter Verwendung einer Harzzusammensetzung ausgebildet werden, die mindestens eines von einem thermoplastischen Harz und einem thermoplastischen Elastomer enthält.

**9.** Reifen nach Anspruch 1, wobei
das mindestens eine von dem thermoplastischen Harz und dem thermoplastischen Elastomer auf Polyamid-, Polyester- oder Polyurethan-Basis basiert.

**Revendications**

**1.** Pneu comprenant :

un châssis de pneu (10) ayant une forme annulaire ;
une couche de renfort (20) située vers l'extérieur du châssis de pneu (10) dans une direction radiale de pneu; et
un caoutchouc de bande de roulement (30) situé vers l'extérieur de la couche de renfort (20) dans la direction radiale de pneu, dans lequel
la couche de renfort (20) inclut un élément de renfort (21) qui est revêtu d'une composition de résine contenant de 50 % en masse à 100 % en masse d'un matériau de résine,
**caractérisé en ce que** le caoutchouc de bande de roulement (30) a une tangente de perte (tan $\delta_{60°C}$) pendant une déformation de 1 % à 60°C dans des conditions d'une charge initiale de 160 mg et d'une fréquence de 52 Hz et un module de conservation (E'$_{30°C}$) pendant une déformation de 1 % à 30°C dans des conditions d'une charge initiale de 160 mg et d'une fréquence de 52 Hz qui répondent à une relation dans la formule (1) montrée ci-dessous :

$$27,5 \times \tan \delta_{60\,°C} + 1,125 \leq E'_{30\,°C} \leq 27,5 \times \tan \delta_{60\,°C} + 11,25 \ (1)$$

où, dans la formule (1), tan $\delta_{60\,°C}$ est la tangente de perte pendant une déformation de 1 % à 60 °C et E'$_{30\,°C}$ est le module de conservation (MPa) pendant une déformation de 1 % à 30 °C.

**2.** Pneu selon la revendication 1, dans lequel
la tangente de perte (tan $\delta_{60\,°C}$) du caoutchouc de bande de roulement (30) pendant une déformation de 1 % à 60 °C n'est pas supérieure à 0,25.

**3.** Pneu selon la revendication 1 ou 2, dans lequel
le caoutchouc de bande de roulement (30) a un module de conservation (E'$_{0,1\%}$) pendant une déformation de 0,1 % à 25 °C dans des conditions d'une charge initiale de 160 mg et d'une fréquence de 52 Hz et un module de conservation ($E'_{3,0\%}$) pendant une déformation de 3,0 % à 25°C dans des conditions d'une charge initiale de 160 mg et d'une fréquence de 52 Hz qui ont un rapport ($E'_{0,1\%}/E'_{3,0\%}$) n'excédant pas 6,0.

4. Pneu selon l'une quelconque des revendications 1 à 3, dans lequel une composition de caoutchouc ayant une teneur en acide organique allant de 0,5 % en masse à 2,5 % en masse est utilisée dans le caoutchouc de bande de roulement (30).

5. Pneu selon l'une quelconque des revendications 1 à 4, dans lequel une composition de caoutchouc contenant de 0,3 partie en masse à 5,0 parties en masse d'un accélérateur de vulcanisation par rapport à 100 parties en masse d'un composant de caoutchouc est utilisée dans le caoutchouc de bande de roulement (30).

6. Pneu selon l'une quelconque des revendications 1 à 5, dans lequel la couche de renfort (20) inclut au moins un élément de renfort (21) qui est enroulé dans une direction circonférentielle de pneu.

7. Pneu selon l'une quelconque des revendications 1 à 6, dans lequel le châssis de pneu (10) est formé à partir d'une composition de résine contenant de 50 % en masse à 100 % en masse d'un matériau de résine.

8. Pneu selon l'une quelconque des revendications 1 à 7, dans lequel l'un ou/et l'autre parmi la couche de renfort (20) et le châssis de pneu (10) sont formés en utilisant une composition de résine qui contient au moins l'un parmi une résine thermoplastique et un élastomère thermoplastique.

9. Pneu selon la revendication 8, dans lequel l'au moins une parmi la résine thermoplastique et l'élastomère thermoplastique est à base de polyamide, à base de polyester ou à base de polyuréthane.

## FIG. 1

EP 3 466 720 B1

**EP 3 466 720 B1**

**Patent documents cited in the description**

- JP 2014189084 A

- JP 2012046030 A